# EUROPÄISCHE PATENTANMELDUNG

(11) **EP 0 534 205 A1**
(43) Veröffentlichungstag der Anmeldung: **31.03.1993**
(21) Anmeldenummer: 92115169.2
(22) Anmeldetag: 04.09.1992
(51) Int. Cl.: B23Q 39/04, B23Q 5/34

(54) **Mehrspindeldrehmaschine**

(30) Priorität: 21.09.1991 DE 4131480; 09.12.1991 DE 4140466
(71) Anmelder: INDEX-WERKE GMBH & CO. KG HAHN & TESSKY, D-73726 Esslingen (DE)
(72) Erfinder: Link, Helmut Friedrich, W-7307 Aichwald 1-Schanbach (DE)
(74) Vertreter: Hoeger, Stellrecht & Partner

(57) **Zusammenfassung**

Um eine Mehrspindeldrehmaschine mit einer an einem Maschinengestell angeordneten Spindeltrommel, umfassend mehrere in mindestens eine Bearbeitungsposition und eine Entnahmeposition für Werkstücke umfassende Spindelpositionen positionierbare Spindeln, einem der Bearbeitungsposition zugeordneten Werkzeug, einer Werkzeugpositioniereinrichtung für das Werkzeug, welche gesteuert durch eine einen Eilgangabschnitt und einen Arbeitsgangabschnitt aufweisende Kurve einen mit der Spindeltrommelschaltung synchronisierten Steuerzyklus durchläuft und einer der Entnahmeposition zugeordneten Werkstückhalteeinrichtung, mit möglichst niedriger Stückzeit zu schaffen wird vorgeschlagen, daß eine Steuereinrichtung für ein Ansteuern des Antriebs vorgesehen ist, welcher Unterabschnitte des Arbeitsgangabschnitts vorgebbar sind, in welchen der Antrieb die Werkstückhalteeinrichtung mit hoher oder niedriger Geschwindigkeit bewegt, daß der Unterabschnitt niedriger Geschwindigkeit so vorgebbar ist, daß während diesem eine Arbeitsbewegung durchführbar ist und daß der Unterabschnitt mit hoher Geschwindigkeit so vorgebbar ist, daß während diesem eine Leerbewegung zumindest teilweise durchführbar ist.

## Beschreibung

Die Erfindung betrifft eine Mehrspindeldrehmaschine mit einer an einem Maschinengestell angeordneten Spindeltrommel, mehreren auf der Spindeltrommel angeordneten Spindeln, die in bezüglich des Maschinengestells feststehenden, mindestens eine Bearbeitungsposition und eine Entnahmeposition für Werkstücke umfassende Spindelpositionen durch Weiterschalten der Spindeltrommel nacheinander positionierbar sind, einem der Bearbeitungsposition zugeordnetem Werkzeug, einer Werkzeugpositioniereinrichtung für das Werkzeug, welche gesteuert durch mindestens eine von einem Kurvenantrieb getriebene und einen Eilgangabschnitt sowie einen Arbeitsgangabschnitt aufweisende Kurve einen mit der Spindeltrommelschaltung synchronisierten Steuerzyklus durchläuft, einer der Werkzeugpositioniereinrichtung zugeordneten Steuereinrichtung, mit welcher der Kurvenantrieb zum Durchlaufen des Eilgangabschnitts auf Eilgeschwindigkeit und zum Durchlaufen des Arbeitsgangabschnitts auf Arbeitsgeschwindigkeit schaltbar ist, und einer der Entnahmeposition zugeordneten drehbaren und auf die Spindel zubewegbaren Werkstückhalteeinrichtung, mit welcher während des Durchlaufens des Arbeitsgangabschnitts mittels einer einen Antrieb umfassenden Positioniereinrichtung für eine Übergabe des Werkstücks mehrere Bewegungen durchführbar sind.

Der Arbeitsgangabschnitt ist insbesondere ferner auch dadurch definiert, daß während des Verlaufs desselben ein einer Bearbeitungsposition zugeordnetes Werkzeug mit einem in dieser Bearbeitungsposition stehenden Werkstück in Eingriff steht.

Bei einer derartigen bekannten Mehrspindeldrehmaschine ist die Dauer des Arbeitsgangabschnitts durch die mehreren in der Entnahmeposition durchzuführenden Bewegungen bestimmt, so daß daraus auch eine Festlegung für die auf einer derartigen Mehrspindeldrehmaschine erreichbare Stückzeit für die Gesamtbearbeitung des Werkstücks erfolgt, da diese Stückzeit direkt abhängig von der Dauer des Arbeitsgangabschnitts ist. Mit der Stückzeit zusammen hängen damit auch die Kosten für die Bearbeitung der Werkstücke auf einer derartigen Mehrspindeldrehmaschine.

Der Erfindung liegt daher die Aufgabe zugrunde, eine möglichst kostengünstig arbeitende Mehrspindeldrehmaschine zu schaffen und somit die Stückzeit einer derartigen Mehrspindeldrehmaschine so gering wie möglich zu halten.

Diese Aufgabe wird bei einer Mehrspindeldrehmaschine der eingangs beschriebenen Art erfindungsgemäß dadurch gelöst, daß eine Steuereinrichtung für ein Ansteuern des Antriebs während des Durchlaufens des Arbeitsgangabschnitts zu einem Bewegen der Werkstückhalteeinrichtung mit einer hohen oder einer niedrigen Geschwindigkeit vorgesehen ist, daß der Steuereinrichtung Unterabschnitte des Arbeitsgangabschnitts vorgebbar sind, in welchen der Antrieb die Werkstückhalteeinrichtung mit hoher Geschwindigkeit oder niedriger Geschwindigkeit bewegt, daß die Bewegungen der Positioniereinrichtung in eine Arbeitsbewegung und mindestens eine Leerbewegung unterteilt sind, daß der Unterabschnitt mit niedriger Geschwindigkeit so vorgebbar ist, daß während diesem die Arbeitsbewegung durchführbar ist, und daß der Unterabschnitt mit hoher Geschwindigkeit so vorgebbar ist, daß während diesem die Leerbewegung zumindest teilweise durchführbar ist.

Mit der erfindungsgemäßen Lösung ist somit eine Möglichkeit geschaffen, die Zeitdauer für die Bewegungen der Positioniereinrichtung in der Entnahmeposition zu reduzieren, nämlich dadurch, daß zwischen Leerbewegungen und Arbeitsbewegungen unterschieden wird und daß außerdem während des Arbeitsgangabschnitts mit der Steuereinrichtung eine Möglichkeit geschaffen wurde, zumindest einen Teil der Leerbewegungen mit hoher Geschwindigkeit des Antriebs auszuführen.

Damit läßt sich die erforderliche Zeitdauer für die Gesamtzahl der Bewegungen während des Arbeitsgangabschnitts reduzieren und somit auch die für den Arbeitsgangabschnitt erforderliche Zeitdauer, so daß dadurch insgesamt die Stückzeit bei einer derartigen Mehrspindeldrehmaschine reduzierbar ist. Dadurch ist ein erheblicher Kostenvorteil bei der Herstellung von Werkstücken auf einer derartigen Mehrspindeldrehmaschine erreichbar.

Insbesondere ist vorgesehen, daß während des Unterabschnitts mit hoher Geschwindigkeit der Werkstückhalteeinrichtung die Vorschubgeschwindigkeit eines einer Bearbeitungsposition zugeordneten Werkzeugs lediglich nicht wesentlich höher ist als die Vorschubgeschwindigkeit während eines Unterabschnitts mit niedriger Geschwindigkeit der Werkstückhalteeinrichtung, das heißt, daß die Vorschubgeschwindigkeit während des Unterabschnitts mit hoher Geschwindigkeit maximal unwesentlich höher ist als die Vorschubgeschwindigkeit während eines Unterabschnitts mit niedriger Geschwindigkeit, jedoch im wesentlichen gleich derselben oder auch niedriger, sogar im Extremfall gleich Null sein kann.

Bei einer erfindungsgemäßen Mehrspindeldrehmaschine kann die Positioniereinrichtung für die Werkstückhalteeinrichtung in unterschiedlichster Art und Weise ausgebildet sein. Beispielsweise ist es denkbar, daß die Positioniereinrichtung einen hydraulischen Antrieb, einen elektrischen Antrieb umfaßt oder im komfortabelsten Fall eine numerisch gesteuerte Achse.

Besonders kostengünstig und in vielen Fällen ausreichend ist es jedoch, wenn die Positioniereinrichtung eine von dem Antrieb angetriebene Steuerkurve aufweist, wobei der Antrieb vorzugsweise ein Antriebsmotor ist.

Ein vorteilhaftes Ausführungsbeispiel der erfindungsgemäßen Lösung sieht dabei vor, daß der Antrieb für die Steuerkurve ein separater Antrieb ist, der nicht mit dem Kurvenantrieb für die Werkzeugpositioniereinrichtung identisch ist, so daß in diesem Fall ein separater Motor für die Positioniereinrichtung vorgesehen ist.

Besonders zweckmäßig ist jedoch eine erfindungsgemäße Lösung, bei welcher der Antrieb der Positioniereinrichtung mit dem Kurvenantrieb der Werkzeugpositioniereinrichtung identisch ist.

Vorzugsweise sind bei einem Ausführungsbeispiel der erfindungsgemäßen Lösung die Werkzeugpositioniereinrichtungen miteinander synchronisiert, so daß ein einziger Steuerzyklus für alle Werkzeugpositioniereinrichtungen existiert und noch vorteilhafter ist es, wenn auch die Bewegungen der Positioniereinrichtung mit diesem Steuerzyklus synchronisiert sind.

Zweckmäßigerweise ist daher bei der erfindungsgemäßen Mehrspindeldrehmaschine - insbesondere aus Kostengründen und auch um eine einfache Synchronisierung aller Bearbeitungsvorgänge in den Bearbeitungspositionen zu erreichen - der Kurvenantrieb ein einziger Antrieb für alle Kurven aller Werkzeugpositioniereinrichtungen, so daß damit insgesamt bei einer derartigen Mehrspindeldrehmaschine lediglich ein einziger Antrieb vorhanden ist, der sämtliche Werkzeugpositioniereinrichtungen in sämtlichen Bearbeitungspositionen und auch zusätzlich noch die Positioniereinrichtung antreibt.

Im Fall eines einzigen Antriebs für alle Kurven sowohl der Werkzeugpositioniereinrichtungen als auch der Positioniereinrichtung für die Werkzeughalteeinrichtung besteht das Problem, daß in dem Unterabschnitt des Arbeitsgangabschnitts, in welchem der Antrieb mit hoher Geschwindigkeit läuft, auch die Kurven für die Werkzeugpositioniereinrichtungen während dieses Unterabschnitts schneller gedreht werden. Dadurch erhöht sich der Vorschub aller Werkzeuge der Werkzeugpositioniereinrichtungen. Eine derartige Erhöhung des Vorschubs ist in gewissen Grenzen tolerierbar, es besteht jedoch die Forderung, die hohe Geschwindigkeit so hoch wie möglich zu machen, so daß insbesondere eine Lösung interessant ist, bei welcher die hohe Geschwindigkeit möglichst groß ist, was wiederum zu einer nicht mehr tolerierbaren Vorschubgeschwindigkeit bei den Werkzeugpositioniereinrichtungen führen würde. Bei einer derartigen hohen Vorschubgeschwindigkeit würden die von den Werkzeugpositioniereinrichtungen angetriebenen Werkzeuge brechen oder zumindest beschädigt werden. Aus diesem Grund sieht eine bevorzugte erfindungsgemäße Lösung vor, daß die Kurve der Werkzeugpositioniereinrichtung in dem Unterabschnitt des Arbeitsgangabschnitts, in dem der Antrieb mit hoher Geschwindigkeit läuft, eine gegenüber den Unterabschnitten des Arbeitsgangabschnitts, in denen der Antrieb mit niedriger Geschwindigkeit läuft, geringere Kurvensteigung aufweist. Durch die Reduzierung der Kurvensteigung in dem Unterabschnitt mit hoher Geschwindigkeit ist die Möglichkeit geschaffen, die Vorschubgeschwindigkeit in diesem Unterabschnitt nicht allzu stark anwachsen zu lassen, es ist sogar die Möglichkeit geschaffen, die Vorschubgeschwindigkeit im Vergleich zu den anderen Unterabschnitten mit niedriger Geschwindigkeit konstant zu halten oder es besteht auch die Möglichkeit, die Vorschubgeschwindigkeit durch eine Reduzierung der Kurvensteigung in dem Unterabschnitt mit hoher Geschwindigkeit auf im wesentlichen Null oder Null zu reduzieren, so daß auf keinen Fall eine Beschädigung oder ein Bruch der von den Werkzeugpositioniereinrichtungen angetriebenen Werkzeuge erfolgt. Insbesondere die Reduzierung der Kurvensteigung auf Null oder im wesentlichen auf Null in dem Unterabschnitt mit hoher Geschwindigkeit schafft eine simple Möglichkeit, unabhängig von der letztlich in diesem Unterabschnitt gewählten Geschwindigkeit, sicherzustellen, daß keine Beschädigung oder kein Bruch der von der Werkzeugpositioniereinrichtung angetriebenen Werkzeuge erfolgt.

Bei dem bislang beschriebenen Ausführungsbeispiel der erfindungsgemäßen Mehrspindeldrehmaschine, insbesondere bei dem Beispiel, bei dem alle Steuerkurven, das heißt auch die Steuerkurve für die Positioniereinrichtung der Werkstückhalteeinrichtung, mit ein- und demselben Antrieb angetrieben sind, müssen, wie vorstehend beschrieben, die Kurven für die einzelnen Bearbeitungen in den Bearbeitungspositionen vorteilhafterweise mit unterschiedlichen Steigungen versehen werden.

Um dies zu vermeiden, trotzdem aber die Leerbewegungen schnell ausführen zu können, sieht ein weiteres vorteilhaftes und erfindungsgemäßes Ausführungsbeispiel vor, daß der Antrieb für die Positioniereinrichtung einen Hauptantrieb zum Antreiben der Steuerkurve und einen Nebenantrieb zur Durchführung zusätzlicher Bewegungen zu denen der Steuerkurve umfaßt. Dabei ist der Hauptantrieb im einfachsten Fall derselbe wie der Antrieb für die Steuerkurven in den Bearbeitungspositionen, es ist aber auch vorteilhafterweise möglich, daß der Hauptantrieb von dem Antrieb für die Steuerkurven in den Bearbeitungspositionen unabhängig ist.

Besonders vorteilhaft ist es bei diesem Ausführungsbeispiel der erfindungsgemäßen Lösung, wenn die Steuereinrichtung den Nebenantrieb während des Unterabschnitts mit hoher Geschwindigkeit ansteuert, so daß der Nebenantrieb die Leerbewegungen übernimmt.

Eine vorteilhafte Weiterbildung dieser Lösung sieht vor, daß die Steuereinrichtung den Nebenantrieb während des Unterabschnitts mit der niedrigen Geschwindigkeit stillsetzt, so daß während dieses Unterabschnitts lediglich ein Antrieb der Werkstückhalteeinrichtung mittels der Steuerkurve erfolgt.

Eine besonders vorteilhafte Lösung sieht vor, daß mit dem Nebenantrieb die Vorschubbewegung zur Übernahme des Werkstücks durchführbar ist.

Ein weiteres vorteilhaftes Ausführungsbeispiel sieht vor, daß mit dem Nebenantrieb die Vorschubbewegung zum Abgeben des Werkstücks aus der Werkstückhalteeinrichtung durchführbar ist.

Zweckmäßigerweise ist der Nebenantrieb mit den Drehstellungen für die Steuerkurve des Antriebs für die Positioniereinrichtung sowie den Stellungen der Steuerkurven der Antriebe für die Werkzeuge in den Bearbeitungspositionen synchronisiert.

Ein besonders vorteilhaftes Ausführungsbeispiel sieht vor, daß der Nebenantrieb einen ein Verbindungselement zwischen der Steuerkurve und der Werkstückhalteeinrichtung variierenden Linearantrieb umfaßt.

Dieses Verbindungselement ist vorzugsweise in seiner Lage variierbar. Es ist aber auch möglich, durch den Linearantrieb ein Übersetzungsverhältnis innerhalb des Verbindungselements zu variieren.

Vorteilhafterweise ist dieser Linearantrieb ein Hubzylinder.

Ein weiteres erfindungsgemäßes Ausführungsbeispiel sieht vor, daß der Nebenantrieb eine einen Segmenthebel von der Steuerkurve abhebende Stelleinrichtung aufweist.

Vorteilhafterweise ist die Stelleinrichtung ein Verstellzylinder.

Bei einem besonders bevorzugten Ausführungsbeispiel sind zwei Nebenantriebe vorhanden, nämlich sowohl ein Linearantrieb als auch eine Stelleinrichtung.

Ein besonders vorteilhaftes Ausführungsbeispiel der erfindungsgemäßen Lösung sieht vor, daß die Werkstückhalteeinrichtung eine Synchronspindel ist.

Mit einer derartigen Synchronspindel läßt sich einerseits in einfacher Weise bei noch laufender Spindel in der Entnahmeposition eine Übergabe des Werkstücks auf die Werkstückhalteeinrichtung durchführen, andererseits bietet eine Synchronspindel, insbesondere bei aus einer Materialstange bearbeiteten Werkstücken, die Möglichkeit, in einfacher Weise in der Entnahmeposition das Werkstück von der Materialstange abzustechen.

Um ein derartiges Abstechen durchführen zu können, ist vorzugsweise vorgesehen, daß der Entnahmeposition ein weiteres Werkzeug zugeordnet ist, mit welchem über eine weitere Werkzeugpositioniereinrichtung eine Arbeitsbewegung und eine Leerbewegung durchführbar sind, wobei die Arbeitsbewegung die Bewegung des Werkzeugs vorzugsweise zum Abstechen darstellt und die Leerbewegung beispielsweise das Zurückfahren des Werkzeugs nach dem Abstechen.

Diese Werkzeugpositioniereinrichtung kann ebenfalls in beliebiger Art und Weise arbeiten. So ist es möglich, bei dieser Werkzeugpositioniereinrichtung einen hydraulischen Linearvorschub, einen elektrischen Linearvorschub oder eine numerische Achse vorzusehen. Besonders einfach und kostengünstig ist es jedoch, wenn die Werkzeugpositioniereinrichtung eine von einem Antrieb angetriebene Steuerkurve aufweist, da dies eine mechanisch robuste und insbesondere in das Konzept der bisherigen Ausführungsbeispiele einfach und kostengünstig integrierbare Lösung darstellt.

Um die Bearbeitung des Werkstücks mit einem weiteren Werkzeug in der Entnahmeposition ebenfalls in die erfindungsgemäße Lösung zu integrieren, sieht ein weiteres, ebenfalls hinsichtlich der Dauer des Arbeitsgangabschnitts noch optimierteres Ausführungsbeispiel vor, daß die weitere Werkzeugpositioniereinrichtung einen Antrieb und eine Steuereinrichtung für ein Ansteuern des Antriebs während des Durchlaufens des Arbeitsgangabschnitts mit einer hohen und einer niedrigen Geschwindigkeit aufweist, daß der Steuereinrichtung Unterabschnitte des Arbeitsgangabschnitts vorgebbar sind, in welchen der Antrieb mit hoher Geschwindigkeit oder niedriger Geschwindigkeit läuft, und daß der Unterabschnitt mit niedriger Geschwindigkeit so vorgebbar ist, daß während diesem die Arbeitsbewegung des zweiten Werkzeugs durchführbar ist, und der Unterabschnitt mit hoher Geschwindigkeit so vorgebbar ist, daß während diesem die Leerbewegung des weiteren Werkzeugs zumindest teilweise durchführbar ist. Mit dieser erfindungsgemäßen Lösung läßt sich die Bewegung des weiteren der Entnahmeposition zugeordneten Werkzeugs ebenfalls zeitlich optimieren, nämlich dadurch, daß deren Leerbewegung zumindest teilweise ebenfalls während der Unterabschnitte mit hoher Geschwindigkeit durchgeführt wird.

Besonders einfach und kostengünstig ist ein Ausführungsbeispiel, bei welchem der Antrieb der weiteren Werkzeugpositioniereinrichtung mit dem Antrieb der Positioniereinrichtung identisch ist, d.h. also ein Ausführungsbeispiel, bei welchem die Antriebe für die in der Entnahmeposition erforderlichen Bewegungen miteinander identisch sind, um in einfacher Weise eine Synchronisation zumindest der in der Entnahmeposition erforderlichen Bewegungen zu erhalten.

Noch vorteilhafter ist jedoch ein Ausführungsbeispiel, bei welchem der Antrieb der weiteren Werkzeugpositioniereinrichtung mit dem Antrieb der Positioniereinrichtung und ebenfalls mit dem für alle Werkzeugpositioniereinrichtungen gemeinsamen Antrieb identisch ist, so daß durch einen einzigen Antrieb sowohl die Werkzeugpositioniereinrichtungen als auch die Bewegungen in der Entnahmeposition angetrieben werden. Dies bedingt zwangsläufig die Synchronisierung aller Bewegungen während des Steuerzyklus und bedingt außerdem zusätzliche Kostenvorteile.

Um bei der erfindungsgemäßen Mehrspindeldrehmaschine auch noch zusätzlich eine weitere Bearbeitung des Werkstücks dann, wenn es in der Werkstückhalteeinrichtung, insbesondere der Synchronspindel, gehalten ist, durchführen zu können, ist bei einer weiteren vorteilhaften Lösung der erfindungsgemäßen Mehrspindeldrehmaschine vorgesehen, daß in die Entnahmeposition ein Werkzeugträger einfahrbar ist, welcher vorzugsweise ein der Werkstückhalteeinrichtung zugewandtes Werkzeug trägt.

Mit einem derartigen der Werkstückhalteeinrichtung zugewandten Werkzeug besteht nun die Möglichkeit, die Seite des Werkstücks, mit welchem dieses bislang in den Spindeln eingespannt war, zu bearbeiten und somit eine sogenannte "Rückseitenbearbeitung" des Werkstücks durchzuführen. Hierzu ist vorzugsweise vorgesehen, daß die Werkstückhalteeinrichtung bei einer Arbeitsbewegung mit in dieser gehaltenem Werkstück auf das eingeschwenkte Werkzeug zur Bearbeitung zustellbar ist. Diese Arbeitsbewegung ist dabei erfindungsgemäß in den Unterabschnitten mit niedriger Geschwindigkeit durchzuführen, da mit dem Werkzeug eine umfassende Bearbeitung der Rückseite erfolgt und somit eine hohe Vorschubgeschwindigkeit des Werkzeugs relativ zum Werkstück nicht möglich ist.

Vorzugsweise ist zum Einfahren des Werkzeugträgers ebenfalls eine Einfahreinrichtung vorgesehen, welche ihrerseits in unterschiedlichster Art und Weise ausgebildet sein kann. Beispielsweise ist es im Rahmen der Erfindung möglich, daß die Einfahreinrichtung einen kurvenlosen, direkt ansteuerbaren Antrieb, das heißt beispielsweise einen hydraulischen oder elektrischen Linearantrieb, umfaßt oder eine NC-Achse. Konstruktiv besonders einfach und vorteilhaft ist es jedoch, wenn die Einfahreinrichtung eine von einem Antrieb angetriebene Kurve aufweist, welche das Einfahren des Werkzeugträgers steuert.

Im letztgenannten Fall ist es, um zumindest die Bewegungen in der Entnahmeposition miteinander zu synchronisieren, vorteilhaft, wenn der Antrieb für die Kurve mit dem Antrieb der Positioniereinrichtung und gegebenenfalls dem Antrieb der weiteren Werkzeugpositioniereinrichtung in der Entnahmeposition identisch ist, so daß zumindest alle Bewegungen in der Entnahmeposition von einem einzigen Antrieb gesteuert sind. Noch vorteilhafter ist es jedoch, wenn dieser Antrieb auch noch mit dem Kurvenantrieb, insbesondere dem für alle Werkzeugpositioniereinrichtungen gemeinsamen Kurvenantrieb identisch ist, so daß die gesamte erfindungsgemäße Mehrspindeldrehmaschine einen einzigen Antrieb für die einzelnen Funktionen in den einzelnen Spindelpositionen aufweist.

Im Rahmen der bisherigen Beschreibung der vorteilhaften Ausführungsbeispiele der erfindungsgemäßen Mehrspindeldrehmaschine wurde nicht näher spezifiziert, wie die hohe Geschwindigkeit und die niedrige Geschwindigkeit in den einzelnen Unterabschnitten in Relation zu der Arbeitsgeschwindigkeit und der Eilgeschwindigkeit stehen. Besonders bevorzugt ist es, wenn die hohe Geschwindigkeit in der Größenordnung der Eilgeschwindigkeit liegt und wenn die niedrige Geschwindigkeit im wesentlichen in der Größenordnung der Arbeitsgeschwindigkeit ist, wobei vorzugsweise die niedrige Geschwindigkeit im wesentlichen gleich der Arbeitsgeschwindigkeit liegt, während die hohe Geschwindigkeit teilweise niedriger als die Eilgeschwindigkeit zu wählen ist.

Im Rahmen der Beschreibung der vorteilhaften erfindungsgemäßen Lösungen wurde bislang nichts darüber ausgesagt, wie die Positioniereinrichtung während des Eilgangabschnitts betreibbar ist. Vorzugsweise ist dabei der Antrieb ebenfalls so ansteuerbar, daß er mit Eilgeschwindigkeit läuft, um die Synchronisation zu den Bewegungen der Werkzeugpositioniereinrichtungen in den Bearbeitungspositionen aufrecht zu erhalten und alle Funktionen während eines Steuerzyklus zu synchronisieren.

Gleiches gilt vorteilhafterweise für die weitere Werkzeugpositioniereinrichtung und insbesondere auch für die Einfahreinrichtung, so daß bei einem besonders vorteilhaften Ausführungsbeispiel die Werkzeugpositioniereinrichtung, die Positioniereinrichtung, die weitere Werkzeugpositioniereinrichtung und die Einfahreinrichtung alle während des Eilgangabschnitts im Eilgang angetrieben sind.

Vorzugsweise durchlaufen bei der erfindungsgemäßen Mehrspindeldrehmaschine sowohl die Werkzeugpositioniereinrichtung als auch die Positioniereinrichtung, die weitere Werkzeugpositioniereinrichtung und die Einfahreinrichtung einen für alle identischen Steuerzyklus der in gleicher Weise für alle in einen Eilgangabschnitt und einen Arbeitsgangabschnitt unterteilt ist.

Ferner betrifft die Erfindung noch ein Verfahren zum Betreiben einer Mehrspindeldrehmaschine mit einer an einem Maschinengestell angeordneten Spindeltrommel, mehreren auf der Spindeltrommel angeordneten Spindeln, die in bezüglich des Maschinengestells feststehenden, mindestens eine Bearbeitungsposition und eine Entnahmeposition für Werkstücke umfassenden Spindelpositionen durch Weiterschalten der Spindeltrommeln nacheinander bewegt werden, mit einem der Bearbeitungsposition zugeordneten Werkzeug, mit einer Werkzeugpositioniereinrichtung für das Werkzeug, welche durch mindestens eine von einem Kurvenantrieb getriebene und einen Eilgangabschnitt und einen Arbeitsgangabschnitt aufweisende Kurve in einem mit der Spindeltrommelschaltung synchronisierten Steuerzyklus gesteuert wird, wobei der Kurvenantrieb zum Durchlaufen des Eilgangabschnitts mit Eilgeschwindigkeit und zum Durchlaufen des Arbeitsgangabschnitts mit Arbeitsgeschwindigkeit betrieben wird, und mit einer der Entnahmeposition zugeordneten, drehbaren und auf die Spindel zubewegbaren Werkstückhalteeinrichtung, mit welcher während des Durchlaufens des Arbeitsgangabschnitts mittels einer einen Antrieb umfassenden Positioniereinrichtung für eine Übergabe des Werkstücks mehrere Bewegungen durchgeführt werden.

Bei diesem Verfahren wird die erfindungsgemäße Aufgabe dadurch gelöst, daß die Werkstückhalteeinrichtung mittels des Antriebs der Positioniereinrichtung während des Durchlaufens des Arbeitsgangabschnitts mit einer hohen oder einer niedrigen Geschwindigkeit bewegt wird, daß Unterabschnitte des Arbeitsgangabschnitts vorgegeben werden, in welchen der Antrieb die Werkstückhalteeinrichtung mit hoher Geschwindigkeit oder niedriger Geschwindigkeit bewegt, daß die Bewegungen der Positioniereinrichtung in eine Arbeitsbewegung und mindestens eine Leerbewegung unterteilt werden und daß der Unterabschnitt mit niedriger Geschwindigkeit so vorgegeben wird, daß während diesem die Arbeitsbewegung durchgeführt wird, und der Unterabschnitt mit hoher Geschwindigkeit so vorgegeben wird, daß während diesem die Leerbewegung zumindest teilweise durchgeführt wird.

Mit diesem erfindungsgemäßen Verfahren werden die bereits im Zusammenhang mit der erfindungsgemäßen Mehrspindeldrehmaschine beschriebenen Vorteile erreicht.

Vorteilhaft ist es dabei ferner, wenn die Positioniereinrichtung über eine von dem Antrieb angetriebene Steuerkurve gesteuert wird, da dies eine besonders einfache und kostengünstige Lösung darstellt.

Darüber hinaus ist es ferner vorteilhaft, wenn die Positioniereinrichtung und die Werkzeugpositioniereinrichtung, insbesondere alle Werkzeugpositioniereinrichtungen, von einem einzigen Antrieb angetrieben werden.

Besonders im letzten Fall ist vorzugsweise vorgesehen, daß die Kurve der Werkzeugpositioniereinrichtung in dem Unterabschnitt des Arbeitsgangabschnitts, in dem der Antrieb mit hoher Geschwindigkeit läuft, mit einer gegenüber den Unterabschnitten des Arbeitsgangabschnitts, in denen der Antrieb mit niedriger Geschwindigkeit läuft mit einer geringeren Kurvensteigung versehen wird, wobei dabei die Kurvensteigung in dem Unterabschnitt mit hoher Geschwindigkeit gegen Null gehen kann.

Bei den vorstehend beschriebenen Ausführungsbeispielen des erfindungsgemäßen Verfahrens wird davon ausgegangen, daß die Positioniereinrichtung lediglich von einem Antrieb angetrieben wird, der während des Arbeitsgangabschnitts die Werkstückhalteeinrichtung mit unterschiedlichen Geschwindigkeiten bewegt.

Ein weiteres vorteilhaftes Ausführungsbeispiel der erfindungsgemäßen Lösung sieht jedoch vor, daß die Positioniereinrichtung durch einen Hauptantrieb und einen Nebenantrieb angetrieben wird.

Zweckmäßigerweise ist dabei vorgesehen, daß die Positioniereinrichtung während des Unterabschnitts mit hoher Geschwindigkeit vom Nebenantrieb angetrieben wird.

Eine besonders bevorzugte Möglichkeit sieht dabei vor, daß die Positioniereinrichtung während des Unterabschnitts mit niedriger Geschwindigkeit vom Hauptantrieb angetrieben wird.

Damit ist eine vorteilhafte Aufteilung der Bewegungen in den einzelnen Unterabschnitten zwischen Haupt- und Nebenantrieb möglich. Dies schafft insbesondere die Möglichkeit, als Hauptantrieb denselben Antrieb wie für die Kurven der Werkzeugpositioniereinrichtungen in den Bearbeitungspositionen zu verwenden und durch einen oder mehrere zusätzliche Nebenantriebe die Leerbewegungen mit großer Geschwindigkeit zumindest teilweise durchzuführen.

Ein besonders bevorzugtes Ausführungsbeispiel sieht dabei vor, daß die Vorschubbewegung zur Übernahme des Werkstücks mit dem Nebenantrieb durchgeführt wird.

Alternativ und ergänzend dazu sieht ein vorteilhaftes Ausführungsbeispiel vor, daß die Vorschubbewegung zum Abgeben des Werkstücks mit dem Nebenantrieb durchgeführt wird.

Darüber hinaus ist vorteilhafterweise vorgesehen, daß der Entnahmeposition ein weiteres Werkzeug zugeordnet wird, mit welchem über eine weitere Werkzeugpositioniereinrichtung eine Arbeitsbewegung und eine Leerbewegung durchgeführt werden. Insbesondere ist mit einem derartigen weiteren Werkzeug ein Abstechen eines teilweise bearbeiteten Werkstücks von einer Materialstange möglich.

Darüber hinaus sieht eine vorteilhafte Weiterbildung einer derartigen Lösung vor, daß die weitere Werkzeugpositioniereinrichtung einen Antrieb aufweist und daß der Antrieb während des Durchlaufens des Arbeitsgangabschnitts mit einer hohen oder einer niedrigen Geschwindigkeit läuft, daß Unterabschnitte des Arbeitsgangabschnitts vorgesehen werden, in welchen der Antrieb mit hoher Geschwindigkeit oder niedriger Geschwindigkeit läuft, daß der Unterabschnitt mit niedriger Geschwindigkeit so vorgegeben wird, daß während diesem die Arbeitsbewegung des weiteren Werkzeugs durchgeführt wird, und daß der Unterabschnitt mit hoher Geschwindigkeit so vorgegeben wird, daß während diesem die Leerbewegung des weiteren Werkzeugs zumindest teilweise durchgeführt wird.

Schließlich ist bei dem erfindungsgemäßen Verfahren vorzugsweise noch vorgesehen, daß in die Entnahmeposition ein Werkzeugträger eingefahren wird, welcher insbesondere ein Werkzeug zur Rückseitenbearbeitung des bereits auf der Vorderseite bearbeiteten Werkstücks trägt.

Insbesondere ist dabei eine Einfahreinrichtung vorgesehen, welche ebenfalls mittels eines Antriebs und einer von dem Antrieb getriebenen Kurve gesteuert wird.

Dabei wird vorzugsweise zur Bearbeitung der Rückseite des Werkstücks die Werkstückhalteeinrichtung, insbesondere dann wenn diese eine Synchronspindel ist, bei einer Arbeitsbewegung mit in dieser gehaltenem Werkstück auf das eingeschwenkte Werkzeug zur Bearbeitung von dessen Rückseite zugestellt.

Weitere Merkmale und Vorteile des erfindungsgemäßen Verfahrens ergeben sich aus der bereits vorstehenden ausführlichen Beschreibung der erfindungsgemäßen Mehrspindeldrehmaschine.

Weitere zusätzliche Merkmale und Vorteile der erfindungsgemäßen Lösung ergeben sich aus der nachfolgenden Beschreibung sowie der zeichnerischen Darstellung zweier Ausführungsbeispiele. In der Zeichnung zeigen:
- Fig. 1: eine schematische Seitenansicht eines ersten Ausführungsbeispiels einer erfindungsgemäßen Mehrspindeldrehmaschine;
- Fig. 2: einen teilweisen Schnitt längs Linie 2-2 in Fig. 1;
- Fig. 3: einen Schnitt längs Linie 3-3 in Fig. 2;
- Fig. 4: eine schematische Darstellung von Vorgängen in einzelnen Spindelpositionen;
- Fig. 5: eine zeitlich auseinandergezogene Darstellung von Schritten in der Spindelposition 6, der Entnahmeposition;
- Fig. 6: eine schematische Darstellung von Kurvenradien einzelner Kurven über deren Drehwinkel, wobei
Fig. 6a den Kurvenverlauf einer Steuerkurve für eine Synchronspindel
Fig. 6b den Kurvenverlauf einer Steuerkurve für ein Einfahren eines Werkzeugträger,
Fig. 6c den Kurvenverlauf für eine Steuerkurve zum Steuern eines Abstechwerkzeugs und
Fig. 6d einen Kurvenverlauf für eine Kurve zum Steuern eines Bearbeitungswerkzeugs in einer Bearbeitungsposition
darstellen.
- Fig. 7: einen Schnitt ähnlich Fig. 3 durch ein zweites Ausführungsbeispiel;
- Fig 8: eine ausschnittsweise vergrößerte Darstellung der Wirkung eines auf einen Segmenthebel wirkenden Verstellzylinders und
- Fig. 9: eine schematische Darstellung von Kurvenradien einzelner Kurven über deren Drehwinkel zusammen mit Funktionen von Nebenantrieben, wobei
- Fig. 9a: den Kurvenverlauf einer Steuerkurve zum Steuern des Abstechens,
- Fig. 9b: Stellungen einer Einfahreinrichtung für einen in die innere Einfahrposition einfahrbaren Werkzeugträger,
- Fig. 9c: Stellungen eines Verstellzylinders,
- Fig. 9d: den Kurvenverlauf einer Steuerkurve für eine Synchronspindel,
- Fig. 9e: Stellungen eines Hubzylinders zwischen dem Segmenthebel und der Synchronspindel und
- Fig. 9f: einen Kurvenverlauf für eine Kurve zum Steuern eines Bearbeitungswerkzeugs in einer Bearbeitungsposition
darstellen.

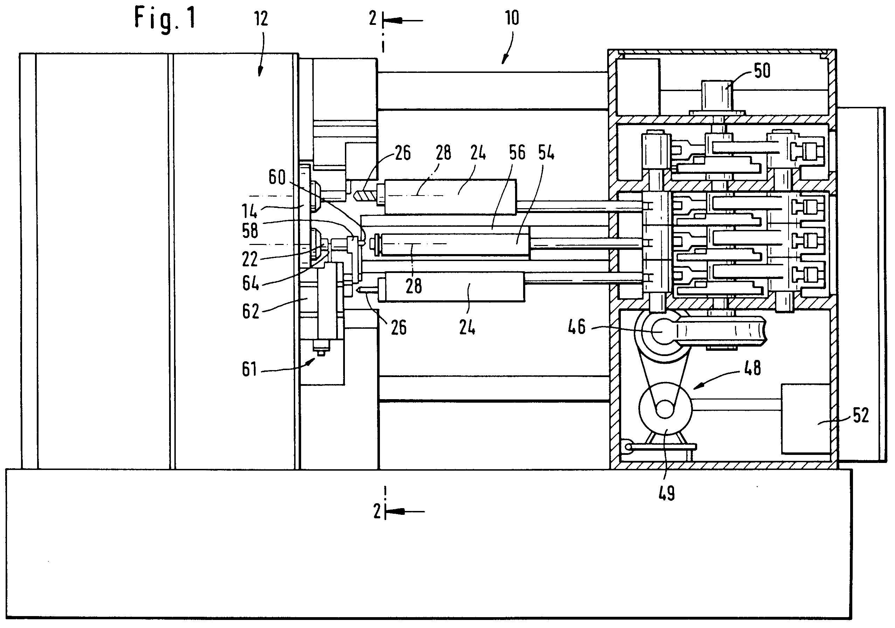

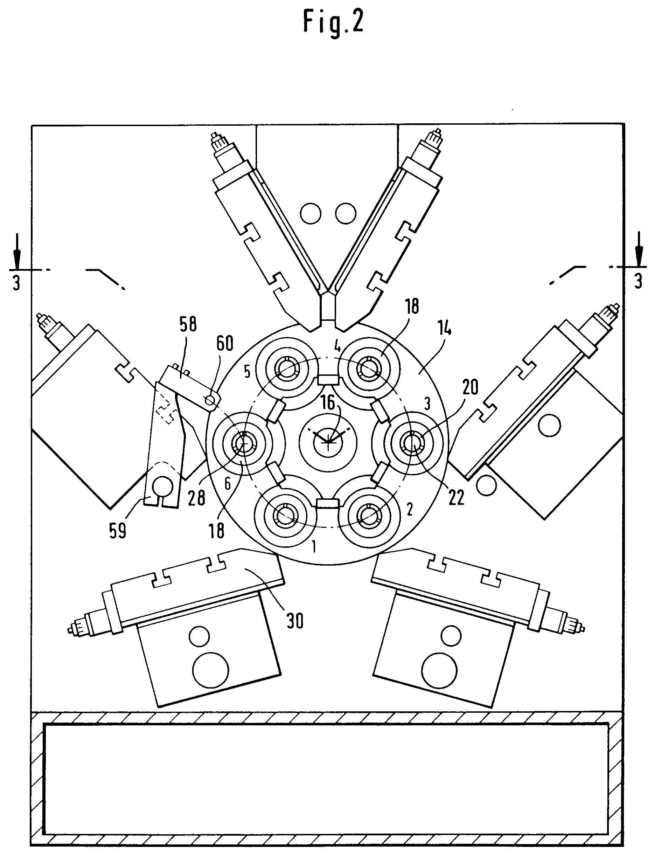

Ein Ausführungsbeispiel einer erfindungsgemäßen Mehrspindelmaschine, dargestellt in Fig. 1 und als Ganzes mit 10 bezeichnet, umfaßt ein Maschinengestell 12, in welchem, wie in Fig. 1 und 2 dargestellt, eine Spindeltrommel 14 um eine Spindeltrommelachse 16 drehbar gelagert ist. In dieser Spindeltrommel 14 sind insgesamt sechs Spindeln 18 in gleichem radialem Abstand von der Spindeltrommelachse 16 und gleichem Winkelabstand voneinander angeordnet.

Jede der Spindeln 18 ist mit einem Spannfutter oder einer Spannzange 20 zum Spannen eines Werkstücks 22 versehen, wobei in dem in Fig. 1 und 2 dargestellten Ausführungsbeispiel die Werkstücke 22 in Form einer Materialstange zuführbar sind.

Die Spindeln 18 der Spindeltrommel 14 sind dabei in insgesamt sechs, mit den Ziffern 1 bis 6 bezeichnete Spindelpositionen bringbar, wobei die Spindelpositionen 1 bis 6 relativ zum Maschinengestell 12 fest angeordnet sind und die Spindeln 18 durch Weiterschalten der Spindeltrommel 14 um einen Schritt nacheinander in die einzelnen Spindelpositionen 1 bis 6 bringbar sind.

In den Spindelpositionen 1 bis 6 sind unterschiedliche Funktionen durchführbar.

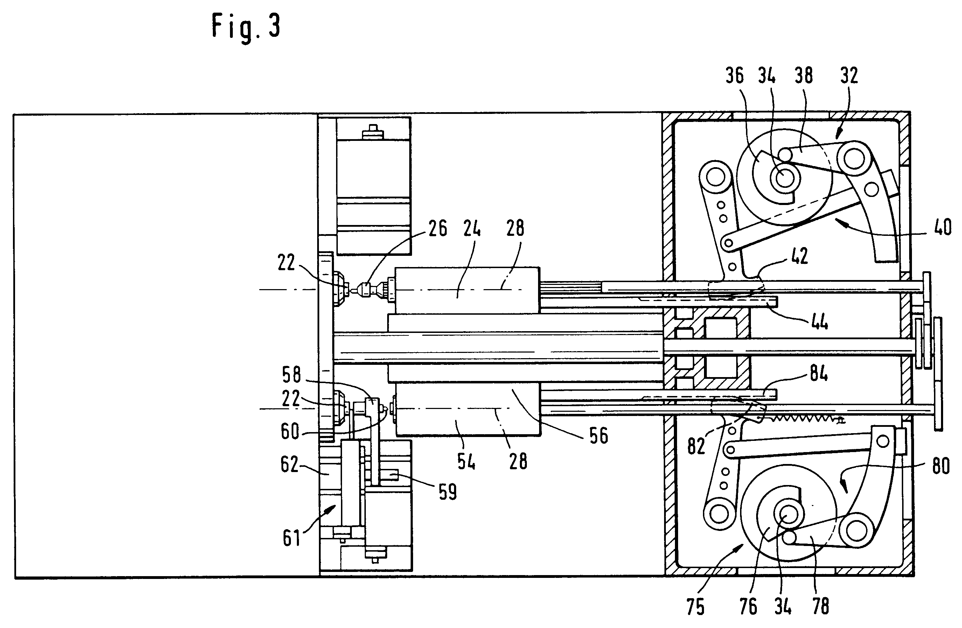

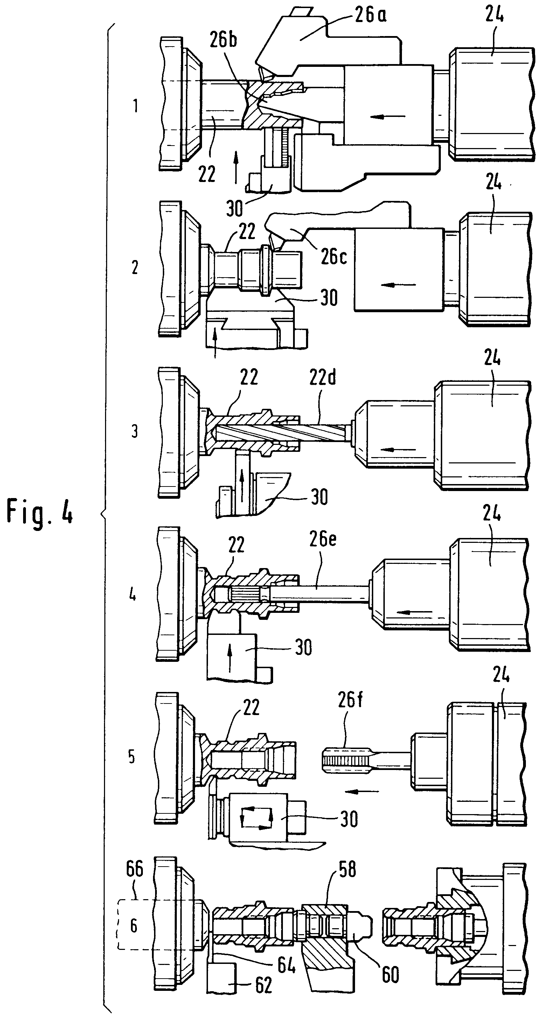

Bei dem dargestellten Ausführungsbeispiel erfolgt in den Spindelpositionen 1 bis 5 eine Bearbeitung des Werkstücks 22 in jeder der in diesen Spindelpositionen 1 bis 5 stehenden Spindeln 18, so daß diese Spindelpositionen als Bearbeitungspositionen bezeichnet werden. Zur Bearbeitung sind, wie in Fig. 1 und 3 dargestellt, in jeder der Spindelpositionen 1 bis 5 an einem Werkzeugschlitten 24 gehaltene Werkzeuge 26 auf die Werkstücke 22 zustellbar. Bei dem in Fig. 1 und 3 dargestellten Ausführungsbeispiel sind dabei die Werkzeugschlitten 24 in Richtung einer Spindelachse 28 der in der jeweiligen Bearbeitungsposition 1 bis 5 stehenden Spindel 18 bewegbar. Beispielsweise sind dies, wie in Fig. 4 dargestellt, in der Bearbeitungsposition 1 ein Drehmeißel 26a, ein Formbohrer 26b, in der Bearbeitungsposition 2 ein Drehmeißel 26c, in der Bearbeitungsposition 3 ein Bohrer 26d in der Bearbeitungsposition 4 eine Reibahle 26e und in der Bearbeitungsposition 5 ein Gewindeschneider 26f.

Alle diese Werkzeuge 26a bis 26f sitzen auf den als Längsschlitten ausgebildeten Werkzeugschlitten 24. Zusätzlich besteht auch noch die Möglichkeit, wie in Fig. 2 und 4 angedeutet, Querschlitten 30 vorzusehen, die beispielsweise mit Werkzeugen zur Außenbearbeitung des Werkstücks 22 bestückt sind.

Die Längsschlitten 24 sind in Richtung der Spindelachsen 28 jeweils mittels einer Werkzeugpositioniereinrichtung 32 bewegbar, wobei jede Werkzeugpositioniereinrichtung 32 eine auf einer Antriebswelle 34 sitzende Kurve 36 aufweist, die ihrerseits von einem Hebel 38 abgetastet wird der seinerseits über einen Hebelmechanismus 40 einen Zahnkamm 42 in Richtung der Spindelachse 28 bewegt und dabei mit einer Zahnstange 44 in Eingriff ist, die mit dem jeweiligen Werkzeugschlitten 24 fest verbunden ist und somit den Werkzeugschlitten 24 entsprechend der Bewegung des Zahnkamms 42 verschiebt.

Die Kurven 36 sind durch einen gemeinsamen Antrieb 48 angetrieben, welcher die Antriebswellen 34, die über eine Hauptwelle 46 miteinander gekoppelt sind und von einem Antriebsmotor 49 angetrieben werden, umfaßt. Ferner ist eine Winkelabfrageeinrichtung 50 auf der Antriebswelle 34 vorgesehen, die mit einer Steuereinrichtung 52 für den Antriebsmotor 49 verbunden ist.

Bei der erfindungsgemäßen Mehrspindeldrehmaschine werden somit alle Kurven 36 gemeinsam von demselben Antriebsmotor 49 angetrieben.

Ein derartiger Antrieb der Werkzeuge 26 der erfindungsgemäßen Mehrspindeldrehmaschine in den Bearbeitungspositionen 1 bis 5 entspricht dem üblicherweise bekannten Antrieb bei einer kurvengesteuerten Mehrspindelmaschine, wie sie beispielsweise in der DE-PS 10 54 304 offenbart ist.

Die Spindelposition 6 der erfindungsgemäßen Mehrspindeldrehmaschine 10 ist als Belade- und Entnahmeposition ausgebildet, so daß in dieser eine Entnahme eines fertig bearbeiteten Werkstücks und ein Beladen mit einem rohen Werkstück erfolgt, wobei dieses Beladen beispielsweise durch Vorschub einer Materialstange durch die jeweils in dieser Spindelposition 6 stehende Spindel 18 hindurch erfolgt.

Ferner ist dieser Spindelposition 6 eine Synchronspindel 54 zugeordnet, welche koaxial zur Spindelachse 28 der jeweils in der Spindelposition 6 stehenden Spindel 18 angeordnet ist und auf einem ebenfalls in Richtung der Spindelachse 28 bewegbaren Längsschlitten 56 sitzt.

Der Spindelposition 6 ist ferner noch ein in den Fig. 1, 2 und 4 erkennbarer und mittels einer Einfahreinrichtung 59 verschwenkbarer Werkzeugträger 58 zugeordnet, welcher ein Werkzeug 60 trägt und mit diesem Werkzeug 60, das in Richtung der Synchronspindel 54 weist, in die Spindelposition 6 einschwenkbar ist und zwar so, daß dieses Werkzeug 60 koaxial zur Spindelachse 28 der in der Spindelposition 6 stehenden Spindel 18 steht und auf die Synchronspindel 54 zuweist. Das Ein- und Ausschwenken des Werkzeugträgers 58 in die Spindelposition 6 oder aus dieser heraus erfolgt ebenfalls gesteuert durch eine in den Fig. 1 bis 4 zeichnerisch nicht dargestellte Kurve der Einfahreinrichtung 59, die ebenfalls von dem Antrieb 48 in gleicher Weise wie die Kurven 36 angetrieben ist.

Schließlich ist der Spindelposition 6 noch ein durch eine weitere Werkzeugpositioniereinrichtung 61 bewegbarer Querschlitten 62 zugeordnet, welcher ein Abstechwerkzeug 64 trägt, das in radialer Richtung zur Spindelachse der in der Spindelposition 6 stehenden Spindel auf das Werkstück 22 in dieser Spindelposition zustellbar ist, um dieses von einer die Spindel 18 in der Spindelposition 6 durchsetzenden Materialstange 66 abzustechen. Auch der Querschlitten 62 ist über eine zeichnerisch in den Fig. 1 bis 4 nicht dargestellte und ebenfalls vom Antrieb 48 in gleicher Weise wie die Kurven 36 angesteuerte Kurve 96 der Werkzeugpositioniereinrichtung 61 in radialer Richtung zur Spindelachse 28 verschiebbar.

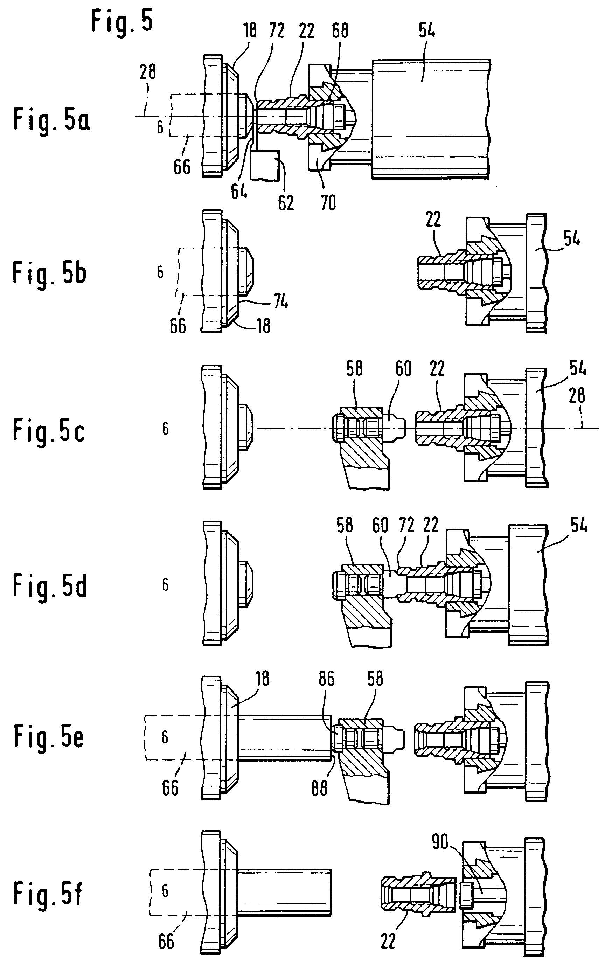

In der Spindelposition 6 werden, wie in Fig. 5 dargestellt, folgende Schritte durchgeführt.

Beispielsweise wird davon ausgegangen, daß - wie in Fig. 5a dargestellt - in der Spindelposition 6 beim Weiterschalten der Spindeltrommel 14 ein von der Spindelposition 5 kommendes und noch auf der Materialstange 66 sitzendes und vorderseitig bearbeitetes Werkstück 22 ankommt, so wird dieses Werkstück 22 auf seiner der Synchronspindel 54 zugewandten Vorderseite 68 von einem Spannfutter 70 der Synchronspindel 54 gespannt.

Die Synchronspindel 54 dreht dabei mit der gleichen Drehzahl wie die in der Spindelposition 6 stehende Spindel 18, so daß zunächst das Werkstück 22 sowohl von der Spindel 18 als auch der Synchronspindel 54 gehalten wird. Das so gehaltene Werkstück 22 wird nun mittels des Abstechwerkzeugs 64 von der Materialstange 66 abgestochen, wozu der Querschlitten 62 in radialer Richtung zur Spindelachse 28 auf eine Trennstelle zwischen dem Werkstück 22 und der Materialstange 66 zugestellt wird und dabei das Werkstück 22 an einem Ende 72 von der Materialstange 66 trennt.

Das nunmehr von der Materialstange 66 getrennte Werkstück 22 wird nunmehr lediglich noch von dem Spannfutter 70 der Synchronspindel 54 gehalten und mit der Synchronspindel 54 in Richtung der Spindelachse 28 von der Spindel 18 weg bewegt, so daß ein großer Abstand zwischen dem Werkstück 22 und einer Stirnseite 74 der Spindel 18 entsteht, wie in Fig. 5b dargestellt. Als nächstes wird nun, wie in Fig. 5c dargestellt, der Werkzeugträger 58 mit dem Werkzeug 60 zwischen das Werkstück 22 und die Spindel 18 eingeschwenkt, wobei in der eingeschwenkten Stellung das Werkzeug 60 koaxial zur Spindelachse 28 ausgerichtet ist und in Richtung des nunmehr in der Synchronspindel 54 gehaltenen Werkstücks 22 weist.

Mit diesem Werkzeug 60 erfolgt nun, wie in Fig. 5d dargestellt, eine Rückseitenbearbeitung des Werkstücks 22 im Bereich des Endes 72 derselben. Hierzu wird die rotierende Synchronspindel 54 mitsamt dem Werkstück 22 in Richtung auf das Werkzeug 60 zubewegt, so daß dieses zunehmend mit dem Werkstück 22 in Eingriff kommt und dieses rückseitig bearbeitet. Die Zustellung der Synchronspindel 54 mit dem Werkstück 22 in Richtung auf das Werkzeug 60 erfolgt dabei mittels einer Positioniereinrichtung 75 gesteuert über eine Kurve 76, welche ebenfalls auf der Antriebswelle 34 sitzt und von dem Antrieb 48 angetrieben ist. Diese Kurve 76 wird mittels eines Segmenthebels 78 abgetastet, der über einen Hebelmechanismus 80 einen Zahnkamm 82 und mit diesem eine Zahnstange 84 sowie den fest mit dieser verbundenen Längsschlitten 56 in Richtung der Spindelachse 28 bewegt, um damit die Synchronspindel 54 entsprechend zu verschieben.

Nach der in Fig. 5d dargestellten Rückseitenbearbeitung des Werkstücks 22 wird die Synchronspindel 54 wieder von dem Werkzeug 60 wegbewegt, so daß dieses außer Eingriff mit dem Werkstück 22 kommt, wie in Fig. 5e dargestellt. Gleichzeitig erfolgt, wie ebenfalls in Fig. 5e dargestellt, ein Vorschub der Materialstange 66 in Richtung auf den Werkzeugträger 58, wobei der Werkzeugträger 58 mit einem Werkstoffanschlag 86 versehen ist, gegen welchen die Materialstange mit einer Stirnseite 88 zur Anlage gebracht wird. Durch diesen Werkstoffanschlag 86 wird der Weg fest vorgegeben, um welche die Materialstange 66 vorzuschieben ist.

Während des Vorschubs der Materialstange 66 wird das Spannfutter 20 der Spindel 18 der Spindelposition 6 geöffnet und nach Beendigung des Vorschubs wieder gespannt, so daß die vorgeschobene Materialstange 66 wiederum fest in der Spindel 18 gespannt ist. Danach erfolgt ein Herausschwenken des Werkzeugträgers 58 aus der Spindelposition 6 in seine in Fig. 2 durchgezogen gezeichnete Stellung, so daß der Werkzeugträger 58 in der Spindelposition 6 nicht mehr stört. Gleichzeitig erfolgt noch ein Auswerfen des nunmehr fertig bearbeiteten Werkstücks, wie in Fig. 5f dargestellt, mittels eines Ausstoßers 90.

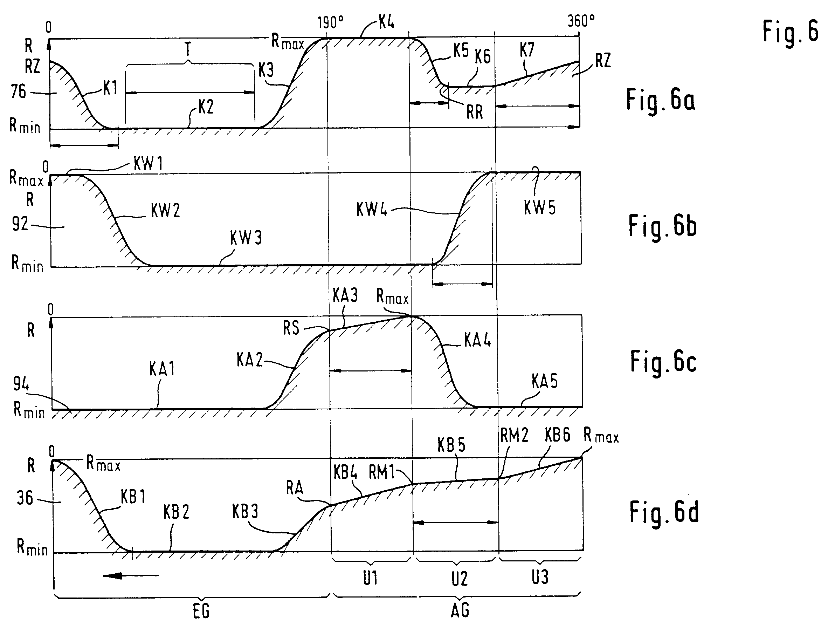

Wie die Steuerung der einzelnen in Fig. 5a bis 5f dargestellten Schritte erfolgt, ist anhand der Darstellung des Radius R der einzelnen hierzu eingesetzten Kurven in Fig. 6a bis 6c dargestellt, wobei in den Fig. 6a bis 6c der Radius R der jeweiligen Kurve über der Drehstellung der jeweiligen Kurve dargestellt ist, die gerade von dem jeweiligen dieser Kurve zugeordneten Hebel abgetastet wird. Generell wird dabei durch eine 360°-Drehung der jeweiligen Kurve ein Steuerzyklus durchlaufen, welcher mit der Weiterschaltung der Spindeltrommel 14 synchronisiert ist, das heißt pro Weiterschaltung der Spindeltrommel 14 erfolgt ein Steuerzyklus und somit eine Drehung der jeweiligen Kurve um 360°.

In Fig. 6a ist hierbei die Kurve 76 dargestellt, welche die Verschiebung der Synchronspindel 54 in Richtung der Spindelachse 28 steuert.

Beispielsweise wird in Fig. 6a davon ausgegangen, daß bei dem Winkel 0° die Bearbeitung der Rückseite des Werkstücks 22 mit dem Werkzeug 60 beendet ist, also eine Stellung, wie sie in Fig. 5d dargestellt ist. Ausgehend von dieser Vorschubstellung der Synchronspindel 54, vorgegeben durch einen Radius RZ der Kurve 76, erfolgt ein Zurückziehen der Synchronspindel 54 durch Reduzierung des Radius R der Kurve 76 entlang einem Kurvenstück K1 auf einen Radius Rₘᵢₙ, welcher die vollständig zurückgezogene oder Ausgangsstellung der Synchronspindel 54 festlegt. Während des Kurvenabschnitts K1 erfolgt ein Auswerfen des bereits fertig bearbeiteten Werkstücks. Steht die Synchronspindel 54 in ihrer Ausgangsstellung, so ist ein Weiterschalten der Spindeltrommel 14 möglich, welche während des Kurvenabschnitts K2 erfolgt, während dessen der Radius R = Rₘᵢₙ ist und somit kein Vorschub der Synchronspindel erfolgt. Nach Beendigung des Weiterschaltens der Spindeltrommel 14 steht, wie in Fig. 5a dargestellt, ein auf der Vorderseite bearbeitetes Werkstück 22 in der Spindelposition 6, welches nun von der Synchronspindel 54 auf der Vorderseite 68 mittels des Spannfutters 70 zu spannen ist. Hierzu wird längs des Kurvenabschnitts K3 der Kurve 76 die Synchronspindel 54 in Richtung der Spindel 18 verfahren wofür die Kurve 76 ihren Radius von Rₘᵢₙ nach Rₘₐₓ ändert. Die Synchronspindel 54 steht in ihrer maximal auf die Spindel 18 vorgeschobenen Stellung beispielsweise nach Drehung der Kurve 76 um einen Winkel von 190°.

Diese Stellung der Synchronspindel 54 muß nun so lange erhalten bleiben, bis das Abstechen des Werkstücks 22 von der Materialstange 66, wie in Fig. 5a dargestellt, beendet ist. Aus diesem Grund bleibt während des Kurvenabschnitts K4 der Radius R der Kurve 76 bei Rₘₐₓ.

Nach Beendigung des Abstechens wird die Synchronspindel 54 von der Spindel 18 wegbewegt, was durch Änderung des Radiuses R der Kurve 76 von Rₘₐₓ auf RR längs des Kurvenabschnitts K5 erfolgt. Die Synchronspindel 54 wird dabei in einen derartigen Abstand von der Spindel 18 bewegt, daß ein kollisionsfreies Einschwenken des Werkzeugträgers 58 möglich ist, so daß der Radius RR größer ist als der Rₘᵢₙ. Ist der Radius RR erreicht, so bleibt dieser längs des Kurvenabschnitts K6 erhalten, da während dieses Abschnitts ein Einschwenken des Werkzeugträgers 58 erfolgt, dessen eingeschwenkte Stellung in Fig. 5c dargestellt ist.

Nach Einschwenken des Werkzeugträgers 58 erfolgt die Rückseitenbearbeitung des Werkstücks 22, die in Fig. 5d dargestellt ist. Hierzu wird die Synchronspindel 54 auf das Werkzeug 60 zubewegt, was längs des Kurvenabschnitts K7 erfolgt, während dessen der Radius R der Kurve 76 linear von RR auf RZ vergrößert wird, wobei der Radius RZ die Stellung der Synchronspindel 54 nach Beendigung der Rückseitenbearbeitung des Werkstücks 22 vorgibt.

Nach Beendigung des Kurvenabschnitts K7 hat die Kurve 76 eine Drehung um 360° durchgeführt, so daß wieder der Ausgangszustand, der der Drehung der Kurve 76 um 0° entspricht erreicht ist und bei Weiterdrehung der bereits beschriebene Zyklus erneut erfolgt.

In Fig. 6b ist die Steuerkurve 92 für die Steuerung des Aus- und Einschwenken des Werkzeugträgers 58 mittels der Einfahreinrichtung 59 dargestellt, die ebenfalls durch den Antriebsmotor 49 angetrieben wird und während eines Steuerzyklus eine Drehung um 360° durchführt. Diese Steuerkurve 92 ist so geformt, daß sie bei der Drehung 0° den Radius Rₘₐₓ aufweist, welcher dem eingeschwenkten Zustand des Werkzeugträgers 58 entspricht, da der Werkzeugträger 58 bei Beendigung der Rückseitenbearbeitung des Werkstücks 22, dargestellt in Fig. 5d noch in der eingeschwenkten Stellung bleiben muß. Diese eingeschwenkte Stellung muß noch so lange erhalten bleiben, bis sich das Werkstück 22 durch Verschieben der Synchronspindel 54 soweit von dem Werkzeug 60 wegbewegt hat, daß dies kollisionsfrei aus der Spindelposition 6 ausschwenkbar ist. Aus diesem Grund bleibt der Werkzeugträger 58 noch während des Kurvenabschnitts KW1 bei Rₘₐₓ. Während des Kurvenabschnitts KW1 erfolgt gleichzeitig auch noch der Vorschub der Materialstange 66 bis zum Werkstoffanschlag 86, wie in Fig. 5e dargestellt. Nach dem die vorgeschobene Materialstange 66 wieder in dem Spannfutter 20 der Spindel 18 und der Spindelposition 6 gespannt ist, erfolgt ein Ausschwenken des Werkzeugträgers 58 durch den Kurvenabschnitt KW2, bei welchem der Radius R der Kurve 92 von Rₘₐₓ auf Rₘᵢₙ zurückgeht, wobei der Radius Rₘᵢₙ dem ausgeschwenkten Zustand des Werkzeugträgers 58 entspricht. Längs des Kurvenabschnitts KW3 verbleibt dann der Radius der Kurve 92 bei Rₘᵢₙ und zwar während des nächsten Weiterschaltens der Spindeltrommel 14 und des Abstechens des Werkstücks 22 sowie des Zurückziehens der Synchronspindel 54 durch den Kurvenabschnitt K5 der Kurve 76. Unmittelbar vor dem Ende des Kurvenabschnitts K5 setzt das Einschwenken des Werkzeugträgers 58 durch den Kurvenabschnitt KW4 ein, längs welchem sich der Radius der Kurve 92 von Rₘᵢₙ auf Rₘₐₓ ändert, so daß der eingeschwenkte Zustand des Werkzeugträgers 58 vor dem Ende des Kurvenabschnitts K5 erreicht ist. Längs des Kurvenabschnitts KW5 bleibt dann der Radius der Kurve 92 bei Rₘₐₓ, das heißt der Werkzeugträger 58 bleibt eingeschwenkt, bis eine Drehung der Kurve 92 um 360° erreicht ist und der Steuerzyklus wieder von vorne beginnt.

Der Verlauf der Steuerkurve 94 der weiteren Werkzeugpositioniereinrichtung 61 zur Steuerung der Bewegung des Abstechwerkzeugs 64 ist in Fig. 6c dargestellt. Die Steuerkurve 94 wird dabei ebenfalls von dem Antriebsmotor 49 angetrieben und durchläuft während einer Drehung um 360° ebenfalls einen Steuerzyklus. Bei der Drehung um 0° steht das Abstechwerkzeug 64 in seiner zurückgezogenen Stellung welche einem Radius R der Steuerkurve 94 von Rₘᵢₙ entspricht. Dieser Radius R bleibt während des Kurvenabschnitts KA1 konstant, da das Abstechwerkzeug 64 erst dann zum Einsatz kommen kann, wenn das Weiterschalten der Spindeltrommel 14 beendet ist. Ungefähr zeitgleich mit Beginn des Kurvenabschnitts K3 beginnt der Kurvenabschnitt KA2, während welchem das Abstechwerkzeug 64 von seiner zurückgezogenen Stellung soweit vorgeschoben wird, daß es in einer Startstellung steht, in welcher es in geringem Abstand von einem Außenmantel der Materialstange 66 angeordnet ist. Der Radius der Steuerkurve 94 ändert sich dabei von Rₘᵢₙ auf den Radius RS, welcher die vorgeschobene Stellung des Werkzeugs 64 in der Startstellung vorgibt. Ausgehend von dieser Startstellung erfolgt während des Kurvenabschnitts K4 ein Abstechen mittels des Abstechwerkzeugs 64, dessen Position durch den Kurvenabschnitt KA3 festgelegt ist. Der Kurvenabschnitt KA3 repräsentiert dabei die lineare Zunahme des Radiuses R der Steuerkurve 94 vom Radius RS auf den Radius Rₘₐₓ, wobei beim Radius Rₘₐₓ das Abstechwerkzeug 64 bis zur Spindelachse 28 vorgeschoben und das Werkstück 22 vollständig von der Materialstange 66 abgestochen ist.

Nach dem Abstechen des Werkstücks 22 erfolgt längs des Kurvenabschnitts KA4 ein Zurückziehen des Abstechwerkzeugs in seine zurückgezogenen Stellung, welche durch den Radius Rₘᵢₙ der Steuerkurve 94 festgelegt ist. Die zurückgezogene Stellung wird am Ende des Kurvenabschnitts KA4 vor dem Ende des Kurvenabschnitts K6 erreicht. Der darauffolgende Kurvenabschnitt KA5 während welchem die Kurve 94 auf dem Radius Rₘᵢₙ verbleibt, hält den zurückgezogenen Zustand des Abstechwerkzeugs 64 aufrecht.

Die Drehung der Kurven 76, 92 und 94 während eines Steuerzyklus um 360° erfolgt mittels des Antriebs 48 jedoch nicht mit konstanter Geschwindigkeit. Um Stückzeit zu sparen, wird der Steuerzyklus in einen Eilgangabschnitt EG unterteilt, welcher die Kurvenabschnitte K1, K2 und K3 umfaßt und ungefähr einer Drehung der Kurve 76 um 190° entspricht. Während dieses Eilgangabschnittes EG läuft der Antriebsmotor 49 im Eilgang, d.h. mit Eilgeschwindigkeit.

Die restliche Drehung der Kurve 76 um weitere 170° erfolgt während eines Arbeitsgangabschnitts AG, welcher die Kurvenabschnitte K4, K5, K6 und K7 umfaßt. Während dieses Arbeitsgangabschnitts AG läuft der Antriebsmotor 49 im Arbeitsgang mit Arbeitsgeschwindigkeit, das heißt wesentlich langsamer als im Eilgang.

Der Übergang vom Eilgangabschnitt EG zum Arbeitsgangabschnitt AG wird von der Steuereinrichtung 52 über die Winkelabfrageeinrichtung 50 erkannt.

Aufgrund der starren Kopplung der Kurven 76, 92 und 94 liegen die Kurvenabschnitte KW1, KW2 und teilweise KW3 sowie KA1 und KA2 ebenfalls im Eilgangabschnitt EG, während die Kurvenabschnitte teilweise KW3, KW4 und KW5 sowie KA3, KA4 und KA5 im Arbeitsgangabschnitt AG liegen.

Der Arbeitsgangabschnitt AG, welcher bei dem dargestellten Ausführungsbeispiel einen Winkelbereich von 170° umfaßt wird benötigt, um mit den Kurven 36 die Bearbeitung des Werkstücks 22 mittels der Werkzeuge 26 zu steuern.

Allerdings ist die zum Durchlaufen des Arbeitsgangabschnitts erforderliche Zeit festgelegt durch die in der Spindelposition 6 durchzuführende Vielzahl von Schritten.

Um diese Zeit zu verkürzen, wird der Arbeitsgangabschnitt AG von der Steuereinrichtung 52 in drei Unterabschnitte U1, U2 und U3 unterteilt, die diese mittels der Winkelabfrageeinrichtung 50 erfaßt. Der Unterabschnitt U1 umfaßt dabei den Kurvenabschnitt K4, der Unterabschnitt U2 die Kurvenabschnitte K5 und K6 und der Unterabschnitt U3 den Kurvenabschnitt K7. Während des Unterabschnitts U1 erfolgt ein Abstechen des Werkstücks 22 von der Materialstange 66, wozu eine Arbeitsbewegung des Abstechwerkzeugs 64 erforderlich ist, die der Kurvenabschnitt KA3 festlegt. Da diese Arbeitsbewegung des Abstechwerkzeugs 64 langsam durchzuführen ist, erfolgt während des Kurvenabschnitts KA3, welcher im gleichen Winkelbereich wie der Kurvenabschnitt K4 liegt und vom Unterabschnitt U1 ebenfalls umfaßt ist, ein Antrieb der Kurven 76, 92 und 94 mit niedriger Geschwindigkeit, vorzugsweise Arbeitsgeschwindigkeit, das heißt der Antriebsmotor 49 wird von der Steuereinrichtung 52 mit Arbeitsgeschwindigkeit betrieben.

In gleicher Weise erfolgt während des Unterabschnitts U3 eine Arbeitsbewegung der Synchronspindel 54, gesteuert durch den Kurvenabschnitt K7. Auch diese ist möglichst mit Arbeitsgeschwindigkeit durchzuführen, so daß auch während des Unterabschnitts U3 die Steuereinrichtung 52 den Antriebsmotor 49 mit Arbeitsgeschwindigkeit laufen läßt.

Dagegen umfaßt der Unterabschnitt U2 bei allen Kurven 76, 92 und 94 lediglich Kurvenabschnitte die arbeitsfreie oder auch sogenannten Leerbewegungen steuern. So steuern die Kurvenabschnitte K5 und K6 das Zurückziehen der Synchronspindel nach dem Abstechen des Werkstücks 22 und das Warten der Synchronspindel 54 bis zum Einschwenken des Werkzeugträgers 58, der Kurvenabschnitt KW4 das Einschwenken des Werkzeugträgers 58 und der Kurvenabschnitt KA4 das Zurückziehen des Abstechwerkzeugs nach dem Abstechen in seine zurückgezogene Stellung. All diese Leerbewegungen werden erfindungsgemäß möglichst schnell durchgeführt, wozu die Steuereinrichtung 52 nach dem Unterabschnitt U1 den Antriebsmotor 49 auf eine höhere Geschwindigkeit schaltet und während des Durchlaufens des Unterabschnitts U2 mit dieser höheren Geschwindigkeit laufen läßt und erst zu Beginn des Unterabschnitts U3 den Antriebsmotor 49 wieder auf Arbeitsgeschwindigkeit schaltet. Vorzugsweise ist diese höhere Geschwindigkeit während des Unterabschnitts U3 erheblich höher als die Arbeitsgeschwindigkeit, sie kann sogar so hoch wie die Eilgeschwindigkeit während des Eilgangabschnitts EG liegen.

Da bei dem beschriebenen Ausführungsbeispiel nicht nur die Kurven 76, 92 und 94 starr miteinander gekoppelt sind, sondern auch die Kurve 36 mit diesen starr gekoppelt ist und ebenfalls während des Steuerzyklus eine Drehung um 360° durchführt, hat das Umschalten des Antriebsmotors 49 während des Unterabschnitts U2 auf eine höhere Geschwindigkeit ebenfalls Auswirkungen auf die Ausbildung der Kurve 36, wie in Fig. 6d dargestellt.

Bei einer Drehung der Kurve 36 um 0° hat das Werkzeug 26 gerade die Bearbeitung des Werkstücks 22 beendet, das heißt es steht in seiner maximal in Richtung auf die Spindel 18 vorgeschobenen Stellung. Bei weiterer Drehung der Kurve 36 erfolgt längs des Kurvenabschnitts KB1 ein Zurückziehen des Werkzeugs 26 in seine Ausgangsstellung, das heißt eine Änderung des Radiuses der Kurve 36 vom Radius Rₘₐₓ auf den Radius Rₘᵢₙ. Das Werkzeug 26 bleibt während der Trommelschaltung TS in seiner Ausgangsstellung, die durch den Kurvenabschnitt KB2 festgelegt ist. Erst nach Beendigung der Trommelschaltung TS wird das Werkzeug 26 durch den Kurvenabschnitt KB3 in eine Anfangsstellung für die Bearbeitung des Werkstücks 22 gebracht, diese Anfangsstellung ist durch den Radius RA der Kurve 36 vorgegeben, das heißt das Werkzeug 26 wird so weit vorgeschoben, bis es unmittelbar vor einem Eingriff in das Werkstück 22 steht.

Die Kurvenabschnitte KB1, KB2 und KB3 liegen dabei voll in dem Eilgangabschnitt EG und werden von diesem umfaßt. Ausgehend von der Anfangsstellung wird während des nun folgenden Arbeitsgangabschnitts AG die Bearbeitung des Werkstücks 22 mittels des Werkzeugs 26 begonnen, wobei der Vorschub des Werkzeugs 26 durch den Kurvenabschnitt KB4 während des Unterabschnitts U1 festgelegt ist. Da während des Unterabschnitts U1 der Antrieb 48 mit Arbeitsgeschwindigkeit läuft, verändert sich während des Abschnitts KB4 der Radius R der Kurve 36 von dem Radius RA bis zu einem Radius RM1, der am Ende des Unterabschnitts U1 vorliegt. Die Steigung des Kurvenabschnitts KB4 entspricht dabei einer üblicherweise für das Werkzeug 26 vorgesehenen Steigung.

Da jedoch während des auf den Unterabschnitt U1 folgenden Unterabschnitts U2 der Antriebsmotor 49 nicht mehr mit Arbeitsgeschwindigkeit sondern mit einer höheren Geschwindigkeit, vorzugsweise sogar mit Eilgeschwindigkeit, läuft, hätte die Verwendung der Steigung des Kurvenabschnitts KB4 im vom Unterabschnitt U2 umfaßten Kurvenabschnitt KB5 eine erheblich gesteigerte Vorschubbewegung des Werkzeugs 26 zur Folge, die mit dem Werkzeug 26 nicht möglich ist, sondern zum Bruch des Werkzeugs 26 oder zu weiteren Beschädigungen desselben führen würde. Aus diesem Grund hat der Kurvenabschnitt KB5, der vom Unterabschnitt U2 umfaßt ist, eine wesentlich geringere Steigung, und zwar ist die Steigung um den Faktor geringer um den die Geschwindigkeit des Antriebsmotors über der Arbeitsgeschwindigkeit liegt, so daß die Vorschubgeschwindigkeit des Werkzeugs 26 im wesentlichen konstant bleibt. Am Ende des Kurvenabschnitts KB5 hat die Kurve 36 einen Radius RM2, der größer ist als der Radius RM1. Im sich daran anschließenden Unterabschnitt U3 läuft der Antriebsmotor 49 wiederum mit Arbeitsgeschwindigkeit, so daß die Steigung des in diesem Unterabschnitt U3 vorliegenden Kurvenabschnitts KB6 wieder im wesentlichen identisch ist mit der Steigung KB4. Damit endet der Kurvenabschnitt KB6 bei dem Radius Rₘₐₓ der Kurve 36, das heißt der maximal in Richtung der Spindel 18 vorgeschobenen Position des Werkzeugs 26.

Durch die erfindungsgemäße Umschaltung des Antriebsmotors 49 zum Beginn und am Ende des Unterabschnitts U2 innerhalb des Arbeitsgangabschnitts AG, um die für die Schritte in der Spindelposition 6 erforderlichen Leerbewegungen möglichst schnell durchzuführen, ist somit auch eine Änderung der Kurve 36 dahingehend erforderlich, daß die Steigung des Kurvenabschnitts KB5 im Unterabschnitt U2 gegenüber den Steigungen der Kurvenabschnitte KB4 und KB6 verringert wird, um eine im wesentlichen konstante Vorschubgeschwindigkeit des Werkzeugs 26 oder der Werkzeuge 26 im Arbeitsgangbereich AG sicherzustellen. Die Steigung des Kurvenabschnitts KB5 kann aber auch noch geringer sein, so daß die Vorschubgeschwindigkeit während des Unterabschnitts U2 geringer ist als die Vorschubgeschwindigkeit während der Unterabschnitte U1 und U3 oder sogar gleich Null ist. Erfindungsgemäß muß lediglich sichergestellt sein, daß die Vorschubgeschwindigkeit des Werkzeugs 26 im Unterabschnitt U2 nicht wesentlich höher liegt als die Vorschubgeschwindigkeit des Werkzeugs 26 in den Unterabschnitten U1 und U3.

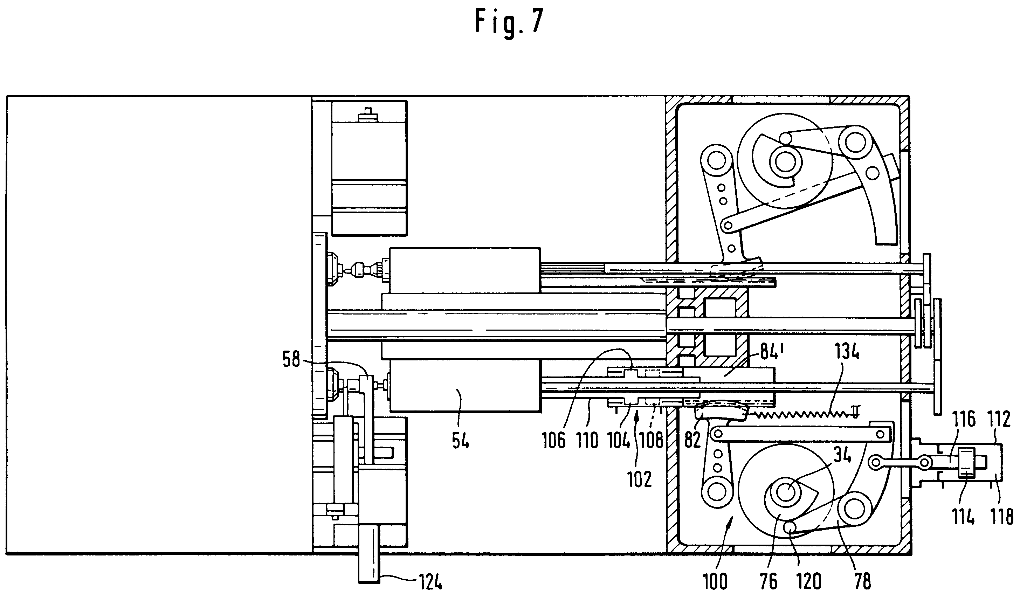

Bei einem zweiten, in Fig. 7 dargestellten Ausführungsbeispiel sind diejenigen Teile, die mit denen des ersten Ausführungsbeispiels identisch sind, mit denselben Bezugszeichen versehen.

In gleicher Weise wie beim ersten Ausführungsbeispiel sitzt die Kurve 76 auf der Antriebswelle 34 und ist von dem Antriebsmotor 49 angetrieben.

Ferner wirkt die Kurve 76 auf den Segmenthebel 78, welcher seinerseits den Zahnkamm 82 bewegt.

Der Antriebsmotor 49 mit der Antriebswelle 34 und dem Segmenthebel 78 sowie dem Zahnkamm 82 stellen einen Hauptantrieb 100 für die Synchronspindel 54 dar. Der Zahnkamm 82 wirkt dabei auf eine Zahnstange 84', in welche ein Hubzylinder 102 integriert ist, welcher einen Hubkolben 104 aufweist, der einerseits in die in Fig. 7 durchgezogen gezeichnete ausgefahrene Stellung 106 und andererseits eine eingefahrene, in Fig. 7 punktiert dargestellte Stellung 108 verfahrbar ist. Der Hubkolben 104 ist über eine Schubstange 110 mit der Synchronspindel 54 verbunden, so daß je nach Stellung des Hubkolbens 104 jeder Vorschubstellung durch den Hauptantrieb 100 mittels des Hubzylinders 102, welcher einen ersten Nebenantrieb darstellt, jeweils zwei unterschiedliche Vorschubstellungen der Synchronspindel 54 zugeordnet werden können.

Darüber hinaus ist dem Hauptantrieb 100 noch ein zweiter Nebenantrieb zugeordnet, dieser umfaßt einen Verstellzylinder 112 mit einem Verstellkolben 114, der mit einer Kolbenstange 116 auf den Segmenthebel 78 wirkt. Zum Verschieben des Verstellkolbens 114 weist der Verstellzylinder 112 einen Druckraum 118 auf, welcher mit Hydraulikmedium beaufschlagbar ist. Ist der Druckraum 118 nicht beaufschlagt und der Verstellkolben 114 dabei frei verschiebbar, so liegt der Segmenthebel 78 mit einer Tastrolle 120 auf der Kurve 76 auf und tastet diese ab, wie in Fig. 7 dargestellt ist.

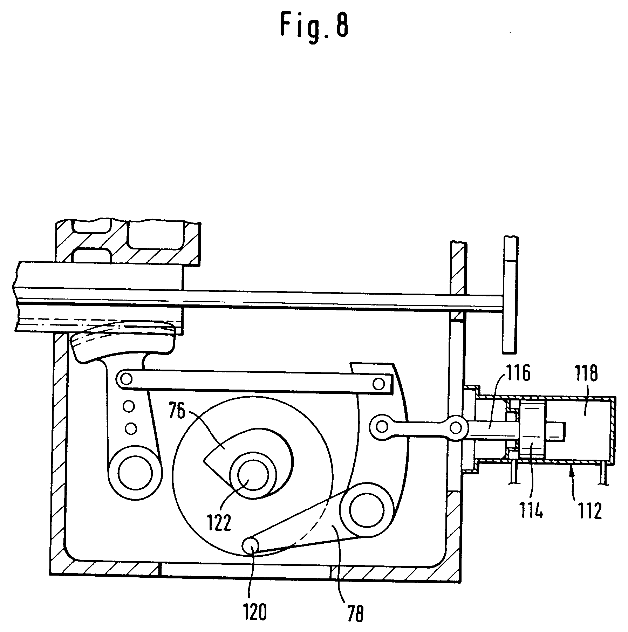

Ist dagegen der Druckraum 118 mit Hydraulikmedium beaufschlagt, so wird der Verstellkolben 114 in seine vorgeschobene Stellung, dargestellt in Fig. 8, geschoben, in welcher der Verstellkolben 114 mit seiner Kolbenstange 116 derart auf den Segmenthebel 78 einwirkt, daß dessen Tastrolle 120 von der Kurve 76 abgehoben ist, in einer Stellung mit einem maximalen radialen Abstand von einer Drehachse 122 der Kurve 76.

Dadurch steht der Zahnkamm 82 in seiner die Zahnstange 84' maximal nach vorne schiebenden Stellung, die unabhängig von der Drehstellung der Kurve 76 lediglich über Betätigung des Verstellzylinders 112 anfahrbar ist.

Ferner ist bei diesem zweiten Ausführungsbeispiel im Gegensatz zum ersten Ausführungsbeispiel für das Einschwenken des Werkzeugträgers 58 nicht die Kurve 92 vorgesehen, die über den Antrieb 48 angetrieben ist, sondern es ist ein Hydraulikzylinder 124 als Einfahreinrichtung zum Ein- und Ausschwenken des Werkzeugträgers 58 vorgesehen.

Im übrigen ist das zweite Ausführungsbeispiel genau wie das erste Ausführungsbeispiel aufgebaut, so daß dieselben Teile mit denselben Bezugszeichen versehen sind und hinsichtlich der Beschreibung derselben auf die Ausführungen zum ersten Ausführungsbeispiel verwiesen werden kann.

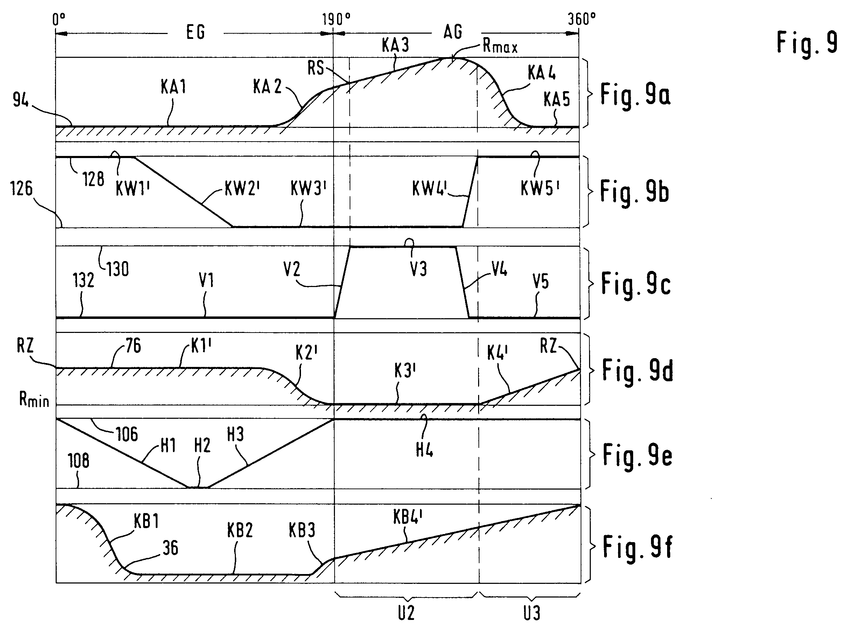

Wie in Fig. 9 dargestellt, funktioniert das zweite Ausführungsbeispiel einer erfindungsgemäßen Mehrspindeldrehmaschine folgendermaßen, wobei die in Fig. 4 und 5 dargestellten Bearbeitungsschritte auch beim zweiten Ausführungsbeispiel identisch durchgeführt werden.

Zunächst ist das zweite Ausführungsbeispiel ebenfalls so ausgebildet, daß die Steuereinrichtung 52 den Antriebsmotor 49 und somit den Antrieb 48 einmal im Eilgangabschnitt und einmal im Arbeitsgangabschnitt betreibt, und zwar bei einem Drehwinkel von 0 bis 190° im Eilgangabschnitt EG und bei einem Drehwinkel von 190 bis 360° im Arbeitsgangabschnitt AG. Das Umschalten des Antriebsmotors 49 in den entsprechenden Winkelstellungen erfolgt mittels der Steuereinrichtung 52 und durch Erfassen der Winkelstellungen mittels der Winkelabfrageeinrichtung 50.

Fig.9a zeigt die Steuerkurve 94 für den Vorschub des Abstechwerkzeugs 64 zum Abstechen der Materialstange in der Spindelposition 6, das heißt der Entnahmeposition.

Die Steuerkurve 94 ist dabei genauso geformt wie die Steuerkurve 94 bei dem ersten Ausführungsbeispiel und weist die gleichen Abschnitte KA1 bis KA5 auf, die im Zusammenhang mit dem ersten Ausführungsbeispiel ausführlich erläutert wurden.

Im Gegensatz zum ersten Ausführungsbeispiel erfolgt jedoch während des Arbeitsgangabschnitts AG ein Drehen der Steuerkurve 94 mit stets gleicher Winkelgeschwindigkeit, das heißt es folgt kein Aufteilen des Arbeitsgangabschnitts bei der Drehung der Steuerkurve 94 in Unterabschnitte, die mit größerer Winkelgeschwindigkeit durchlaufen werden.

Fig.9b zeigt die Stellungen des Hydraulikzylinders 124, welcher bei dem zweiten Ausführungsbeispiel zum Ein- und Ausschwenken des Werkzeugträgers 58 mit dem Rückseitenbearbeitungswerkzeug 60 dient. Dabei wird durch die Linie 126 die ausgeschwenkte Stellung des Werkzeugträgers 58 und durch die Linie 128 die in die Entnahmeposition eingeschwenkte Stellung des Werkzeugträgers 58 angegeben.

Die Steuerung des Hydraulikzylinders 124 erfolgt ebenfalls über die Steuereinrichtung 52 und wird über die Winkelabfrageeinrichtung 50 mit den Drehstellungen der Antriebswellen 34 und somit des Antriebsmotors 49 synchronisiert.

Wie in Fig.9b zu erkennen, ist zunächst beim Drehwinkel 0° der Werkzeugträger 58 von der vorhergehenden Rückseitenbearbeitung in die Entnahmeposition noch eingeschwenkt und verbleibt während des Abschnitts KW1' in dieser eingeschwenkten Position. Ungefähr mittig des Eilgangabschnitts erfolgt ein Ausschwenken des Werkzeugträgers während des Abschnitts KW2', so daß der Werkzeugträger 58 während des Abschnitts KW3' in seiner ausgeschwenkten Stellung bleibt, während des Abschnitts K4' eingeschwenkt wird und in dieser eingeschwenkten Stellung während des Abschnitts KW5' verbleibt.

Die einzelnen Abschnitte KW1' bis KW5' sind bei diesem Ausführungsbeispiel keine Kurvenabschnitte mehr, sondern stellen lediglich Drehwinkelbereiche von Drehungen der Antriebswellen 34 dar, während denen der Werkzeugträger 58 in bestimmten Stellungen steht oder in bestimmte Stellungen mittels des Hydraulikzylinders 124 bewegt wird.

Die Betätigung des Verstellzylinders 112 ist in Fig.9c dargestellt, wobei die Linie 130 die Druckbeaufschlagung des Druckraumes 118 und die Linie 132 die Drucklosigkeit des Druckraums 118 repräsentiert.

Die Druckbeaufschlagung des Druckraums 118 oder die Drucklosschaltung desselben erfolgen ebenfalls über die Steuerung 52, synchronisiert mit den Winkelstellungen der Antriebswellen 34 über die Winkelabfrageeinrichtung 50.

Bei Drehwinkel Null ist der Druckraum 118 drucklos, so daß die Tastrolle 120 auf der Kurve 76 läuft und ein Vorschub der Synchronspindel 54 entsprechend der Steuerung durch die Kurve 76 erfolgt. Dieser Zustand bleibt während des Abschnitts V1 erhalten, und zwar bis unmittelbar zum Beginn des Arbeitsgangabschnitts. Unmittelbar nach Beginn des Arbeitsabschnitts wird während eines Abschnitts V2 der Druckraum 118 druckbeaufschlagt, das heißt der Verstellkolben 114 wirkt derart auf den Segmenthebel 78, daß die Tastrolle 120 in ihre Stellung mit maximalem radialem Abstand von der Drehachse 122 der Kurve 76 kommt, die in Fig. 8 dargestellt ist. In dieser Stellung ist die Synchronspindel 54 maximal in Richtung des Werkstücks 22 nach vorne gefahren, um dieses an seiner Vorderseite 68 mittels des Spannfutters 70 zu spannen. Die Synchronspindel 54 bleibt während des Abschnitts V3 in dieser Stellung, das heißt während dieses Abschnitts V3 bleibt der Druckraum 118 druckbeaufschlagt, so daß während dieser Zeit ein Abstechen mittels des Abstechwerkzeugs 64 erfolgen kann, das bereits während des Abschnitts KA2 in Richtung auf die Materialstange zu bewegt wurde. Nach Beendigung des Abstechens, das heißt bei Erreichen von Rₘₐₓ und Beendigung des Abschnitts KA3 der Steuerkurve 94, erfolgt während des Abschnitts V4 wiederum ein Drucklosschalten des Druckraums 118, so daß die Tastrolle 120 wiederum an der Kurve 76 zur Anlage kommt. Hierzu ist beispielsweise der Zahnkamm 82 mittels einer Feder 134 beaufschlagt, so daß die Tastrolle 120 stets in Anlage an der Kurve 76 bleibt.

Anstelle der Feder 134 ist es aber auch denkbar, den Verstellkolben 114 auf seiner der Druckraum 118 gegenüberliegenden Seite hydraulisch zu beaufschlagen und somit dadurch mit einer Kraft auf den Segmenthebel 78 einzuwirken, daß die Tastrolle 120 an der Kurve 76 angelegt bleibt.

Die Leerbewegung der Synchronspindel 54 mit hoher Geschwindigkeit während der Abschnitte V2 und V4 erfolgt während des Unterabschnitts U2 innerhalb des Arbeitsgangabschnitts AG ohne Vorschub durch die Kurve 76.

Nach Beendigung des Abschnitts V4 steht die Synchronspindel 54 mit abgestochenem Werkstück 22 in einer Stellung, in welcher eine Rückseitenbearbeitung mittels des Werkzeugs 60 in dem Werkzeugträger 58 erfolgen kann. Der Beginn des Abschnitts V5 in Fig. 9c, das heißt das Erreichen der Stellung der Synchronspindel 54, in welcher eine Rückseitenbearbeitung erfolgen kann, fällt auch zusammen mit dem Beginn des Abschnitts KW4' in Fig. 9b, das heißt dem Einschwenken des Werkzeugträgers 58.

Die Kurve 76, welche die Bewegung der Synchronspindel 54 während der Rückseitenbearbeitung steuert, ist in Fig. 9d dargestellt, diese Kurve 76 hat dabei beim zweiten Ausführungsbeispiel einen Verlauf, der sich erheblich von dem der Kurve 76 des ersten Ausführungsbeispiels unterscheidet.

Zunächst ist die Kurve 76 beim Drehwinkel Null immer noch beim maximalen Radius RZ und verbleibt bei diesem maximalen Radius während eines Bereichs K1', der im Eilgangabschnitt liegt. Ferner wird während des Eilgangabschnitts während eines Bereichs K2' der Radius auf den Radius Rₘᵢₙ reduziert und verbleibt auf diesem Rₘᵢₙ während des Beginn des Arbeitsgangabschnitts über einen Bereich K3'. Der Bereich K3' endet zu dem Zeitpunkt, zu dem der Werkzeugträger 58 mit dem Werkzeug 60 eingefahren ist, das heißt also am Ende des Abschnitts KW4' in Fig. 9b, hier beginnt der Abschnitt K4', während welchem der Radius mit dem Drehwinkel linear zunimmt bis zum Radius RZ und somit eine Rückseitenbearbeitung des Werkstücks 22 erfolgt.

Diese Rückseitenbearbeitung erfolgt mit niedriger Geschwindigkeit der Synchronspindel 54 während des Unterabschnitts U3 des Arbeitsgangabschnitts AG.

Im Gegensatz zum ersten Ausführungsbeispiel wird der gesamte Arbeitsgangabschnitt AG, das heißt die Abschnitte K3' und K4,' stets mit derselben Drehgeschwindigkeit des Antriebsmotors 49, das heißt für den Arbeitsgang geeigneten Geschwindigkeit, durchlaufen, das heißt es werden keine Unterabschnitte U mit größerer Drehgeschwindigkeit des Motors 49 durchlaufen, da die Leergangbewegung während des Unterabschnitts U2, bei welcher die Synchronspindel 54 sich mit größerer Geschwindigkeit bewegt, durch den Verstellkolben 114 erzeugt wird, so daß während des Arbeitsgangabschnitts zu keinem Zeitpunkt die Notwendigkeit besteht, Leerbewegungen der Synchronspindel 54 durch schnelleres Drehen der Antriebswelle 34 schneller durchzuführen, da die Schnelligkeit dieser Leerbewegung während der Abschnitte V2 und V4 durch den Verstellzylinder 112, der sehr schnell bewegbar ist, erreicht wird.

Das Zurückfahren der Synchronspindel 54 während des Eilgangabschnitts und somit auch während der Trommelschaltung könnte, wie beim ersten Ausführungsbeispiel ebenfalls über eine geeignete Form der Kurve 76 während des Eilgangabschnitts erreicht werden.

Noch vorteilhafter ist es, insbesondere um die Wege noch schneller zurückzulegen und den Eilgangabschnitt EG noch schneller durchlaufen zu können, diese weitere Bewegung der Synchronspindel zum Auswerfen des Werkstücks 22 mittels des Hubzylinders 102, das heißt des ersten Nebenantriebs durchzuführen. Dies ist in Fig. 9e dargestellt, dabei repräsentiert die Linie 106 die ausgefahrene, das heißt in Fig. 7 durchgezogen gezeichnete Stellung des Hubzylinders 102 und die Linie 108 die eingefahrene Stellung des Hubzylinders 102.

Unmittelbar nach Beendigung der Rückseitenbearbeitung, das heißt Erreichen des Drehwinkels 360°, und somit unmittelbar nach Erreichen des Drehwinkels 0° erfolgt, gesteuert durch die Steuereinrichtung 52, eine Ansteuerung des Hubzylinders 102 derart, daß dieser von seiner ausgefahrenen Stellung, in welcher er während des gesamten Arbeitsgangabschnitts AG steht, im Verlauf eines Abschnitts H1 eingefahren wird in die eingefahrene Stellung 108, in dieser während des Auswerfens des Werkstücks 22, das heißt während des Winkelbereichs H2 verbleibt, dann während des Bereichs H3 wieder ein Ausfahren des Hubzylinders 102 in die Stellung 106 erfolgt, die nach Beendigung des Eilgangabschnitts EG und zu Beginn des Arbeitsgangabschnitts AG beendet ist. Während des gesamten Arbeitsgangabschnitts AG, das heißt während des Abschnitts H4, verbleibt der Hubzylinder 102 in seiner ausgefahrenen Stellung 106.

Schließlich zeigt Fig. 9f die Kurve 36 zur Bearbeitung des Werkstücks 22 in den üblichen Bearbeitungspositionen, das heißt den Spindelpositionen 1 bis 5. Während des Eilgangabschnitts EG ist die Kurve 36 genauso ausgebildet wie beim ersten Ausführungsbeispiel, das heißt die Abschnitte KB1, KB2 und KB3 sind identisch ausgeführt. Der Unterschied besteht lediglich in der Ausbildung der Kurve 36 während des Arbeitsgangabschnitts. Während des Arbeitsgangabschnitts, im Abschnitt KB4' hat die Kurve 36 eine konstante Steigung, da aufgrund der Nebenantriebe 102 und 112 keine Notwendigkeit besteht, den Antriebsmotor 49 schneller laufen zu lassen, um Leerbewegungen schneller durchzuführen, so daß die Kurve 36 genauso ausgebildet sein kann, wie bei einem gewöhnlichen kurvengesteuerten Mehrspindeldrehautomaten, bei welchem lediglich eine Unterteilung der Drehung der Antriebswellen 34 in einen Eilgangabschnitt und einen Arbeitsgangabschnitt erfolgt. Es ist somit während des gesamten Arbeitsgangabschnitts, das heißt während des Abschnitts KB4' in Fig. 9f, eine Bearbeitung in den Bearbeitungspositionen möglich.

## Patentansprüche

1. Mehrspindeldrehmaschine mit einer an einem Maschinengestell angeordneten Spindeltrommel, mehreren auf der Spindeltrommel angeordneten Spindeln, die in bezüglich des Maschinengestells feststehenden, mindestens eine Bearbeitungsposition und eine Entnahmeposition für Werkstücke umfassende Spindelpositionen durch Weiterschalten der Spindeltrommel nacheinander positionierbar sind, einem der Bearbeitungsposition zugeordneten Werkzeug, einer Werkzeugpositioniereinrichtung für das Werkzeug, welche gesteuert durch mindestens eine von einem Kurvenantrieb getriebene und einen Eilgangabschnitt und einen Arbeitsgangabschnitt aufweisende Kurve, einen mit der Spindeltrommelschaltung synchronisierten Steuerzyklus durchläuft, einer der Werkzeugpositioniereinrichtung zugeordneten Steuereinrichtung, mit welcher der Kurvenantrieb zum Durchlaufen des Eilgangabschnitts auf Eilgeschwindigkeit und zum Durchlaufen des Arbeitsgangabschnitts auf Arbeitsgeschwindigkeit schaltbar ist, und einer der Entnahmeposition zugeordneten drehbaren und auf die Spindel zubewegbaren Werkstückhalteeinrichtung, mit welcher während des Durchlaufens des Arbeitsgangabschnitts mittels einer einen Antrieb umfassenden Positioniereinrichtung für eine Übergabe des Werkstücks mehrere Bewegungen durchführbar sind,
**dadurch gekennzeichnet**,
daß eine Steuereinrichtung (52) für ein Ansteuern des Antriebs (48) während des Durchlaufens des Arbeitsgangabschnitts (AG) zu einem Bewegen der Werkstückhalteeinrichtung (54) mit einer hohen und einer niedrigen Geschwindigkeit vorgesehen ist, daß der Steuereinrichtung (52) Unterabschnitte (U1, U2, U3) des Arbeitsgangabschnitts (AG) vorgebbar sind, in welchen der Antrieb (48) die Werkstückhalteeinrichtung (54) mit hoher Geschwindigkeit oder niedriger Geschwindigkeit bewegt, daß die Bewegungen der Positioniereinrichtung (75) in eine Arbeitsbewegung (K7) und mindestens eine Leerbewegung (K5, K6) unterteilt sind, daß der Unterabschnitt (U1, U3) mit niedriger Geschwindigkeit so vorgebbar ist, daß während diesem die Arbeitsbewegung (K7) durchführbar ist und daß der Unterabschnitt (U2) mit hoher Geschwindigkeit so vorgebbar ist, daß während diesem die Leerbewegung (K5, K6) zumindest teilweise durchführbar ist.

2. Mehrspindeldrehmaschine nach Anspruch 1, dadurch gekennzeichnet, daß die Positioniereinrichtung (75) eine von dem Antrieb (48) angetriebene Steuerkurve (76) aufweist.

3. Mehrspindeldrehmaschine nach Anspruch 2, dadurch gekennzeichnet, daß der Antrieb (48) der Positioniereinrichtung (75) mit dem Kurvenantrieb (48) der Werkzeugpositioniereinrichtung (32) identisch ist.

4. Mehrspindeldrehmaschine nach Anspruch 3, dadurch gekennzeichnet, daß die Kurve der Werkzeugpositioniereinrichtung (32) in dem Unterabschnitt (U2) des Arbeitsgangabschnitts (AG) in dem der Antrieb (48) mit hoher Geschwindigkeit läuft, eine gegenüber dem Unterabschnitt (U1, U3) des Arbeitsgangabschnitts (AG) in dem der Antrieb (48) mit niedriger Geschwindigkeit läuft, geringere Kurvensteigung aufweist.

5. Mehrspindeldrehmaschine nach Anspruch 2, dadurch gekennzeichnet, daß der Antrieb (48) für die Positioniereinrichtung (75) einen Hauptantrieb (49) zum Antreiben der Steuerkurve (76) und einen Nebenantrieb (102, 112) zur Durchführung zusätzlicher Bewegungen zu denen der Steuerkurve (76) umfaßt.

6. Mehrspindeldrehmaschine nach Anspruch 5, dadurch gekennzeichnet, daß die Steuereinrichtung (52) den Nebenantrieb (102, 112) während des Unterabschnitts mit hoher Geschwindigkeit ansteuert.

7. Mehrspindeldrehmaschine nach Anspruch 6, dadurch gekennzeichnet, daß die Steuereinrichtung (52) den Nebenantrieb (102, 112) während des Unterabschnitts mit niedriger Geschwindigkeit stillsetzt.

8. Mehrspindeldrehmaschine nach einem der Ansprüche 5 bis 7, dadurch gekennzeichnet, daß mit dem Nebenantrieb (112) die Vorschubbewegung zur Übernahme des Werkstücks durchführbar ist.

9. Mehrspindeldrehmaschine nach einem der Ansprüche 6 bis 8, dadurch gekennzeichnet, daß mit dem Nebenantrieb (102) die Vorschubbewegung zum Abgeben des Werkstücks (22) aus der Werkstückhalteeinrichtung (54) durchführbar ist.

10. Mehrspindeldrehmaschine nach einem der Ansprüche 5 bis 9, dadurch gekennzeichnet, daß der Nebenantrieb einen eine Verbindung zwischen der Steuerkurve (76) und der Werkstückhalteeinrichtung (54) variierenden Linearantrieb (102) umfaßt.

11. Mehrspindeldrehmaschine nach Anspruch 10, dadurch gekennzeichnet, daß der Nebenantrieb ein Hubzylinder (102) ist.

12. Mehrspindeldrehmaschine nach einem der Ansprüche 5 bis 11, dadurch gekennzeichnet, daß der Nebenantrieb eine einen Segmenthebel (78) von der Steuerkurve abhebende Stelleinrichtung (112) aufweist.

13. Mehrspindeldrehmaschine nach Anspruch 12, dadurch gekennzeichnet, daß die Stelleinrichtung ein Verstellzylinder (112) ist.

14. Mehrspindeldrehmaschine nach einem der voranstehenden Ansprüche, dadurch gekennzeichnet, daß die Werkstückhalteeinrichtung eine Synchronspindel (54) ist.

15. Mehrspindeldrehmaschine nach einem der voranstehenden Ansprüche, dadurch gekennzeichnet, daß der Entnahmeposition (6) ein weiteres Werkzeug (64) zugeordnet ist, mit welchem über eine weitere Werkzeugpositioniereinrichtung während des Arbeitsgangabschnitts (AG) eine Arbeitsbewegung (KA3) und eine Leerbewegung (KA4) durchführbar sind.

16. Mehrspindeldrehmaschine nach Anspruch 15, dadurch gekennzeichnet, daß die weitere Werkzeugpositioniereinrichtung (61) einen Antrieb (48) und eine Steuereinrichtung (52) für ein Ansteuern des Antriebs (48) während des Durchlaufens des Arbeitsgangabschnitts (AG) mit einer hohen oder einer niedrigen Geschwindigkeit aufweist, daß der Steuereinrichtung (52) Unterabschnitte (U1, U2, U3) des Arbeitsgangabschnitts (AG) vorgebbar sind, in welchen der Antrieb (48) mit hoher Geschwindigkeit oder niedriger Geschwindigkeit läuft, und daß der Unterabschnitt (U1, U3) mit niedriger Geschwindigkeit so vorgebbar ist, daß während diesem die Arbeitsbewegung (KA3) des weiteren Werkzeugs (64) durchführbar ist, und der Unterabschnitt (U2) mit hoher Geschwindigkeit so vorgebbar ist, daß während diesem die Leerbewegung (KA4) des weiteren Werkzeugs (64) zumindest teilweise durchführbar ist.

17. Mehrspindeldrehmaschine nach einem der Ansprüche 15 oder 16, dadurch gekennzeichnet, daß der Antrieb (48) der weiteren Werkzeugpositioniereinrichtung (62) mit dem Antrieb (48) der Positioniereinrichtung (75) identisch ist.

18. Mehrspindeldrehmaschine nach einem der voranstehenden Ansprüche, dadurch gekennzeichnet, daß in die Entnahmeposition (6) ein Werkzeugträger (58) einfahrbar ist.

19. Mehrspindeldrehmaschine nach Anspruch 18, dadurch gekennzeichnet, daß der Werkzeugträger (58) ein der Werkstückhalteeinrichtung (54) zugewandtes Werkzeug (60) trägt.

20. Mehrspindeldrehmaschine nach Anspruch 18 oder 19, dadurch gekennzeichnet, daß der Werkzeugträger durch eine Einfahreinrichtung (59) ein- und ausfahrbar ist.

21. Mehrspindeldrehmaschine nach Anspruch 20, dadurch gekennzeichnet, daß die Einfahreinrichtung (59) einen Antrieb (48) und eine von dem Antrieb (48) angetriebene Kurve (92) aufweist.

22. Mehrspindeldrehmaschine nach Anspruch 20, dadurch gekennzeichnet, daß die Einfahreinrichtung (59) einen kurvenlosen direkt ansteuerbaren Antrieb (124) aufweist.

23. Mehrspindeldrehmaschine nach Anspruch 22, dadurch gekennzeichnet, daß der Antrieb ein Hydraulikzylinder (124) ist.

24. Mehrspindeldrehmaschine nach einem der Ansprüche 18 bis 23, dadurch gekennzeichnet, daß die Werkstückhalteeinrichtung (54) bei einer Arbeitsbewegung (K7) mit in dieser gehaltenem Werkstück (22) auf das eingefahrene Werkzeug (60) zur Bearbeitung zustellbar ist.

25. Mehrspindeldrehmaschine nach Anspruch 24, dadurch gekennzeichnet, daß die Werkstückhalteeinrichtung durch eine Kurve (76) gesteuert auf das eingefahrene Werkzeug (60) zustellbar ist.

26. Verfahren zum Betreiben einer Mehrspindeldrehmaschine mit einer an einem Maschinengestell angeordneten Spindeltrommel, mehreren auf der Spindeltrommel angeordneten Spindeln, die in bezüglich des Maschinengestells feststehenden, mindestens eine Bearbeitungsposition und eine Entnahmeposition für Werkstücke umfassende Spindelpositionen durch Weiterschalten der Spindeltrommel nacheinander bewegt werden, einem der Bearbeitungsposition zugeordneten Werkzeug, einer Werkzeugpositioniereinrichtung für das Werkzeug, welche durch mindestens eine von einem Kurvenantrieb getriebene und einen Eilgangabschnitt und einen Arbeitsgangabschnitt aufweisende Kurve in einem mit der Spindeltrommelschaltung synchronisierten Steuerzyklus gesteuert wird, wobei der Kurvenantrieb zum Durchlaufen des Eilgangabschnitts mit Eilgeschwindigkeit und zum Durchlaufen des Arbeitsgangabschnitts mit Arbeitsgeschwindigkeit betrieben wird, und einer der Entnahmeposition zugeordneten, drehbaren und auf die Spindel zubewegbaren Werkstückhalteeinrichtung, mit welcher während des Durchlaufens des Arbeitsgangabschnitts mittels einer einen Antrieb umfassenden Positioniereinrichtung für eine Übergabe des Werkstücks mehrere Bewegungen durchgeführt werden, dadurch gekennzeichnet, daß die Werkstückhalteeinrichtung mittels des Antriebs der Positioniereinrichtung während des Durchlaufens des Arbeitsgangbereichs mit einer hohen oder einer niedrigen Geschwindigkeit bewegt wird, daß Unterabschnitte des Arbeitsgangabschnitts vorgesehen werden, in welchen der Antrieb die Werkstückhalteeinrichtung mit hoher Geschwindigkeit oder niedriger Geschwindigkeit bewegt, daß die Bewegungen der Positioniereinrichtung in eine Arbeitsbewegung und mindestens eine Leerbewegung unterteilt werden und daß der Unterabschnitt mit niedriger Geschwindigkeit so vorgegeben wird, daß während diesem die Arbeitsbewegung durchgeführt wird, und der Unterabschnitt mit hoher Geschwindigkeit so vorgegeben wird, daß während diesem die Leerbewegung zumindest teilweise durchgeführt wird.

27. Verfahren nach Anspruch 26, dadurch gekennzeichnet, daß die Positioniereinrichtung über eine von dem Antrieb angetriebene Steuerkurve gesteuert wird.

28. Verfahren nach Anspruch 27, dadurch gekennzeichnet, daß die Positioniereinrichtung und die Werkzeugpositioniereinrichtung von einem einzigen Antrieb angetrieben werden.

29. Verfahren nach Anspruch 27 oder 28, dadurch gekennzeichnet, daß die Kurve der Werkzeugpositioniereinrichtung in dem Unterabschnitt des Arbeitsgangabschnitts, in dem der Antrieb mit hoher Geschwindigkeit läuft, mit einer gegenüber den Unterabschnitten des Arbeitsgangabschnitts, in denen der Antrieb mit niedriger Geschwindigkeit läuft, mit einer geringen Kurvensteigung versehen wird.

30. Verfahren nach Anspruch 26 oder 27, dadurch gekennzeichnet, daß die Positioniereinrichtung durch einen Hauptantrieb und einen Nebenantrieb angetrieben wird.

31. Verfahren nach Anspruch 30, dadurch gekennzeichnet, daß die Positioniereinrichtung während des Unterabschnitts mit hoher Geschwindigkeit vom Nebenantrieb angetrieben wird.

32. Verfahren nach Anspruch 31, dadurch gekennzeichnet, daß die Positioniereinrichtung während des Unterabschnitts mit niedriger Geschwindigkeit vom Hauptantrieb angetrieben wird.

33. Verfahren nach einem der Ansprüche 30 bis 32, dadurch gekennzeichnet, daß die Vorschubbewegung zur Übernahme des Werkstücks mit dem Nebenantrieb durchgeführt wird.

34. Verfahren nach einem der Ansprüche 30 bis 33, dadurch gekennzeichnet, daß die Vorschubbewegung zum Abgeben des Werkstücks mit dem Nebenantrieb durchgeführt wird.

35. Verfahren nach einem der Ansprüche 26 bis 34, dadurch gekennzeichnet, daß der Entnahmeposition ein weiteres Werkzeug zugeordnet wird, mit welchem über eine weitere Werkzeugpositioniereinrichtung eine Arbeitsbewegung und eine Leerbewegung durchgeführt wird.

36. Verfahren nach Anspruch 35, dadurch gekennzeichnet, daß die weitere Werkzeugpositioniereinrichtung einen Antrieb aufweist und daß der Antrieb während des Durchlaufens des Arbeitsgangabschnitts mit einer hohen oder einer niedrigen Geschwindigkeit läuft, daß Unterabschnitte des Arbeitsgangabschnitts vorgesehen werden, in welchen der Antrieb mit hoher Geschwindigkeit oder niedriger Geschwindigkeit läuft, und daß der Unterabschnitt mit niedriger Geschwindigkeit so vorgegeben wird, daß während diesem die Arbeitsbewegung des weiteren Werkzeugs durchgeführt wird, und daß der Unterabschnitt mit hoher Geschwindigkeit so vorgegeben wird, daß während diesem die Leerbewegung des weiteren Werkzeugs zumindest teilweise durchgeführt wird.

37. Verfahren nach einem der Ansprüche 26 bis 36, dadurch gekennzeichnet, daß in die Entnahmeposition ein Werkzeugträger mit einem Werkzeug eingefahren wird.

38. Verfahren nach Anspruch 37, dadurch gekennzeichnet, daß in die Entnahmeposition ein Werkzeugträger mit einem Werkstoffanschlag eingefahren wird.

39. Verfahren nach Anspruch 37 oder 38, dadurch gekennzeichnet, daß mit dem Werkzeug eine Rückseitenbearbeitung durchgeführt wird.
